(19) Europäisches Patentamt
European Patent Office
Office européen des brevets

(11) EP 4 548 773 A1

(12) **EUROPEAN PATENT APPLICATION**
published in accordance with Art. 153(4) EPC

(43) Date of publication:
07.05.2025 Bulletin 2025/19

(21) Application number: 23830927.2

(22) Date of filing: 26.05.2023

(51) International Patent Classification (IPC):
A23L 5/00 (2016.01)    A23L 13/00 (2016.01)
A23J 3/00 (2006.01)    A23J 3/16 (2006.01)
A23J 3/18 (2006.01)    A23J 3/26 (2006.01)

(52) Cooperative Patent Classification (CPC):
A23D 7/04; A23J 3/227; A23L 5/00; A23L 13/00;
A23J 3/00; A23J 3/16; A23J 3/18; A23J 3/26

(86) International application number:
PCT/JP2023/019774

(87) International publication number:
WO 2024/004476 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 JP 2022105051

(71) Applicant: FUJIFILM Corporation
Tokyo 106-8620 (JP)

(72) Inventors:
• MATSUNO, Ryo
  Ashigarakami-gun, Kanagawa 258-8577 (JP)
• KOBAYASHI, Yuka
  Ashigarakami-gun, Kanagawa 258-8577 (JP)
• NAKAGAWA, Yosuke
  Ashigarakami-gun, Kanagawa 258-8577 (JP)

(74) Representative: HGF
HGF Limited
1 City Walk
Leeds LS11 9DX (GB)

(54) **FATTY MASS COMPOSITION, FATTY MASS MIXTURE, MEAT ANALOG, AND METHOD FOR PRODUCING FATTY MASS COMPOSITION**

(57) Provided are a fat lump composition, including a granular material containing an oil and/or fat; and an edible ionically crosslinkable polymer that is crosslinked with a cation, in which b/a is 2.00 or more, in which in at least one of cross sections of the fat lump composition perpendicular to a longitudinal direction, b is a length of a line having a maximum length between two points, and a is a length of a line having a maximum length among lines perpendicular to the line having the maximum length between the two points, a fat lump mixture, a meat alternative, and a method of producing a fat lump composition.

FIG.1

**Description**

Technical Field

The present disclosure relates to a fat lump composition, a fat lump mixture, a meat alternative, and a method of producing a fat lump composition.

Background Art

Livestock meat is a food material widely consumed in the world. However, from the viewpoint of health maintenance, attempts have been made to refrain from intake of livestock meat and to intake a meat-like food (hereinafter, also referred to as "meat alternative") using a vegetable protein derived from a plant such as soybean as a raw material.

In recent years, attempts have been made to bring the texture of the meat alternative closer to that of livestock meat, and for example, Japanese Patent Publication (JP-B) No. H2-41315 proposes "a method of producing a meat-like food, the method including mixing an O/W type emulsion having a compression oil release ratio of 15% or more and containing (a) a protein, (b) an oil and/or fat, and (c) water as main components at a weight composition ratio a:b:c of 1:7 to 40:1 to 20, a fibrous protein obtained by kneading a vegetable protein-containing material with water, applying a shear stress under heating to orient the kneaded product, and then defibrating the oriented kneaded product, and a binder so that the O/W type emulsion accounts for from 5 to 50% by weight of the entire meat-like food, and then molding and heating the mixture".

SUMMARY OF INVENTION

Technical Problem

The meat alternatives currently on the market are meat alternatives having an appearance before cooking that is not similar to an appearance of livestock meat, or meat alternatives having an appearance that is similar to an appearance of minced livestock meat (obtained by grinding and chopping livestock meat with a mincer or the like). However, livestock meat is in high demand as raw chunks of meat (chunk of meat: the same applies hereinafter). Therefore, from the viewpoint of an increase in demand for meat alternatives, there is a demand for a meat alternative having an appearance similar to that of a chunk of meat.

An object of an embodiment of the disclosure is to provide a fat lump composition, a fat lump mixture, and a method of producing a fat lump composition that can produce a meat alternative having an appearance similar to that of a chunk of meat.

Another object of an embodiment of the disclosure is to provide a meat alternative having an appearance similar to that of a chunk of meat.

Solution to Problem

The disclosure includes the following aspects.

<1> A fat lump composition containing:

a granular material containing an oil and/or fat; and
an edible ionically crosslinkable polymer that is crosslinked with a cation,
in which b/a is 2.00 or more, in which in at least one of cross sections of the fat lump composition perpendicular to a longitudinal direction, b is a length of a line having a maximum length between two points, and a is a length of a line having a maximum length among lines perpendicular to the line having the maximum length between the two points.

<2> The fat lump composition according to <1>, in which c/b is 2.00 or more, in which c is a length of the fat lump composition in the longitudinal direction.
<3> The fat lump composition according to <2>, in which the length c is from 10.0 mm to 100.0 mm.
<4> The fat lump composition according to any one of <1> to <3>, in which the length a is from 0.5 mm to 8.0 mm.
<5> The fat lump composition according to any one of <1> to <4>, in which d/a is 0.80 or less, in which d is a length of a line having a minimum length among lines which are perpendicular to the line having the maximum length between the two points and have a ratio of a length to the line having the maximum length between the two points of 0.10 or more.
<6> A fat lump mixture containing the fat lump composition according to any one of <1> to <5>,

in which a content of the fat lump composition is 30% by mass or more with respect to a total mass of the fat lump mixture.

<7> A meat alternative containing:

a lean-like portion containing a protein; and
the fat lump composition according to any one of <1> to <5> or the fat lump mixture according to <6>.

<8> The meat alternative according to <7>, in which a content of the fat lump composition or the fat lump mixture is 3% by mass or more with respect to a total mass of the meat alternative.

<9> A method of producing a fat lump composition, the method including:

a step of bringing a liquid containing an edible ionically crosslinkable polymer and a granular material containing an oil and/or fat into contact with a liquid containing a cation to prepare a fat lump composition precursor; and
a step of shaping the fat lump composition precursor.

<10> The method of producing a fat lump composition according to <9>, in which a time from the contact between the liquid containing an edible ionically crosslinkable polymer and the granular material containing an oil and/or fat and the liquid containing a cation to the start of the shaping of the fat lump composition precursor is within 1 minute.

<11> The method of producing a fat lump composition according to <9> or <10>, in which the shaping of the fat lump composition precursor is performed by pressurizing the fat lump composition precursor by a shaping member and a support member.

<12> The method of producing a fat lump composition according to <11>, in which the shaping member is a shaping roller arranged so as to face the support member,

the shaping roller has a shaping part having a projection, and
a minimum distance between the projection and the support member is from 0.1 mm to 1.0 mm.

<13> The method of producing a fat lump composition according to <12>, in which the contact between the liquid containing an edible ionically crosslinkable polymer and the granular material containing an oil and/or fat, and the liquid containing a cation, is performed by supplying the liquid containing an edible ionically crosslinkable polymer and the granular material containing an oil and/or fat to a surface of the shaping roller or the support member on which the liquid containing a cation is present, and then supplying the liquid containing a cation.

<14> The method of producing a fat lump composition according to <13>, in which a ratio of a rotation speed or a movement speed of the shaping roller or the support member to a supply speed of the liquid containing an edible ionically crosslinkable polymer, and the granular material containing an oil and/or fat, to the shaping roller or the support member is 1.00 or more.

<15> The method of producing a fat lump composition according to any one of <12> to <14>, in which the shaping part has two or more projections,

the projections extend in one direction, and
an interval between adjacent projections is 10.0 mm or less.

<16> The method of producing a fat lump composition according to any one of <12> to <15>, in which the shaping roller includes a dicing part.

Advantageous Effects of Invention

According to an embodiment of the disclosure, a fat lump composition, a fat lump mixture, and a method of producing a fat lump composition that can produce a meat alternative having an appearance similar to that of chunk of meat are provided.

According to an embodiment of the disclosure, a meat alternative having an appearance similar to that of chunk of meat is provided.

BRIEF DESCRIPTION OF DRAWINGS

Fig. 1 is a top view illustrating an embodiment of a fat lump composition of the disclosure.

Fig. 2 is a cross-sectional view taken along A-A of the fat lump composition illustrated in Fig. 1.

Fig. 3 is a schematic view illustrating an embodiment of a production apparatus that can be used in a method of producing a fat lump composition of the disclosure.

Fig. 4 is a front image of a steak meat alternative produced using a fat lump composition of Example 1.

Fig. 5 is a cross-sectional image of the steak meat alternative produced using the fat lump composition of Example 1.

Fig. 6 is a front image of a steak meat alternative produced using a fat lump composition of Example 2.

Fig. 7 is a cross-sectional image of the steak meat alternative produced using the fat lump composition of Example 2.

Fig. 8 is a front image of a steak meat alternative produced using a fat lump composition of Comparative Example 1.

Fig. 9 is a cross-sectional image of the steak meat alternative produced using the fat lump composition of Comparative Example 1.

Fig. 10 is a front image of a steak meat alternative produced using a fat lump composition of Comparative Example 2.

Fig. 11 is a cross-sectional image of the steak meat alternative produced using the fat lump composition of Comparative Example 2.

Fig. 12 is a front image of a steak meat alternative produced using a fat lump composition of Example 13.

Fig. 13 is a cross-sectional image of the steak meat alternative produced using the fat lump composition of Example 13.

Fig. 14 is a front image of a steak meat alternative produced using a fat lump composition of Example 14.

Fig. 15 is a cross-sectional image of the steak meat alternative produced using the fat lump composition of Example 14.

Fig. 16 is a front image of a steak meat alternative produced using a fat lump composition of Example 15.

Fig. 17 is a cross-sectional image of the steak meat alternative produced using the fat lump composition of Example 15.

Fig. 18 is a schematic view illustrating another embodiment of a production apparatus that can be used in the method of producing a fat lump composition of the disclosure.

DESCRIPTION OF EMBODIMENTS

Hereinafter, embodiments that are examples of the present invention will be described. These descriptions and examples illustrate embodiments and do not limit the scope of the invention.

With regard to the stepwise numerical ranges described herein, the upper limit value or the lower limit value described in one numerical range may be replaced with the upper limit value or the lower limit value of another stepwise numerical range. In the numerical ranges described herein, upper limit values or lower limit values of the numerical value ranges may be replaced with values described in Examples.

Each component may contain a plurality of corresponding substances.

In a case in which a plurality of kinds of substances corresponding to each component are present in a composition, unless otherwise specified, the amount of each component in the composition means the total amount of the plurality of substances present in the composition.

In the disclosure, the term "step" includes not only an independent step, but also a step that can achieve a predetermined object even in the case of being not clearly distinguished from other steps.

In the disclosure, a combination of two or more preferred aspects is a more preferred aspect.

When an embodiment is described with reference to the drawings in the disclosure, the configuration of the embodiment is not limited to the configuration illustrated in the drawings. The sizes of the members in each drawing are conceptual, and the relative relationship between the sizes of the members is not limited thereto.

<Fat lump Composition>

A fat lump composition according to an embodiment of the disclosure (hereinafter, also referred to as "specific fat lump composition") contains a granular material containing an oil and/or fat, and an edible ionically crosslinkable polymer that is crosslinked with a cation,

in which b/a is 2.00 or more, in which in at least one of cross sections of the fat lump composition perpendicular to a longitudinal direction, b is a length of a line having a maximum length between two points, and a is a length of a line having a maximum length among lines perpendicular to the line having the maximum length between the two points.

According to the specific fat lump composition, it is possible to produce a meat alternative having an appearance similar to a chunk of meat. The reason is presumed as follows.

In the disclosure, a "chunk of meat" refers to uncooked raw livestock meat cut out from livestock for meat into an arbitrary size, and also refers to livestock meat that is not ground or chopped after being cut out from livestock. On the surface of a chunk of meat, the fat often has an elongated shape.

In the specific fat lump composition, b/a is 2.00 or more, in which in at least one of cross sections of the specific fat lump composition perpendicular to a longitudinal direction, b is a length of a line having a maximum length between two points, and a is a length of a line having a maximum length among lines perpendicular to the line having the maximum length between the two points. As a result, the cross section of the specific fat lump composition has an elongated shape. Therefore, a meat alternative obtained by using the specific fat lump composition has an appearance similar to that of chunk of meat.

From the viewpoint of brining the appearance of the meat alternative closer to the appearance of the chunk of meat, b/a is preferably 2.20 or more, more preferably 2.40 or more, and still more preferably 2.60 or more. From the viewpoint of brining the appearance of the meat alternative closer to the appearance of the chunk of meat, b/a is preferably 50.00 or less, more preferably 30.00 or less, still more preferably 10.00 or less, and particularly preferably 5.00 or less. From the viewpoint of brining the appearance of the meat alternative closer to the appearance of the chunk of meat, b/a is preferably from 2.00 to 50.00.

From the viewpoint of brining the appearance of the meat alternative closer to the appearance of the chunk of meat, the length a is preferably from 0.5 mm to 8.0 mm, and more preferably from 1.0 mm to 6.0 mm.

From the viewpoint of brining the appearance of the meat alternative closer to the appearance of the chunk of meat, the length b is preferably from 1.0 mm to 16.0 mm, and more preferably from 3.0 mm to 12.0 mm.

From the viewpoint of brining the appearance of the meat alternative closer to the appearance of the chunk of meat, b2/b1 is preferably 0.90 or less, more preferably 0.80 or less, and still more preferably 0.70 or less, in which in the longitudinal direction of the fat lump composition, a maximum value of the length b is b1, and a minimum value of the length b is b2. From the viewpoint of brining the appearance of the meat alternative closer to the appearance of the chunk of meat, b2/b1 is preferably 0.45 or more. From the viewpoint of brining the appearance of the meat alternative closer to the appearance of the chunk of meat, b2/b1 is preferably from 0.45 to 0.90.

From the viewpoint of brining the appearance of the meat alternative closer to the appearance of the chunk of meat, c/b is preferably 1.00 or more, more preferably 2.00 or more, and still more preferably 2.50 or more, in which c is a length of the fat lump composition in the longitudinal direction. From the viewpoint of brining the appearance of the meat alternative closer to the appearance of the chunk of meat, c/b is preferably 25.00 or less. From the viewpoint of brining the appearance of the meat alternative closer to the appearance of the chunk of meat, c/b is preferably from 1.00 to 25.00.

From the viewpoint of brining the appearance of the meat alternative closer to the appearance of the chunk of meat, the length c is preferably from 5.0 mm to 150.0 mm, more preferably from 10.0 mm to 100.0 mm, and still more preferably from 15.0 mm to 70.0 mm.

From the viewpoint of brining the appearance of the meat alternative closer to the appearance of the chunk of meat, d/a is preferably 0.80 or less, more preferably 0.70 or less, and still more preferably 0.60 or less, in which d is a length of a line having a minimum length among lines which are perpendicular to the line having the maximum length between the two points and have a ratio of a length to the line having the maximum length between the two points of 0.10 or more. From the viewpoint of brining the appearance of the meat alternative closer to the appearance of the chunk of meat, d/a is preferably 0.05 or more. From the viewpoint of brining the appearance of the meat alternative closer to the appearance of the chunk of meat, d/a is preferably from 0.05 to 0.80.

From the viewpoint of brining the appearance of the meat alternative closer to the appearance of the chunk of meat, the length d is preferably from 0.1 mm to 3.0 mm, more preferably from 0.1 mm to 2.5 mm, and still more preferably from 0.2 mm to 2.5 mm.

In the disclosure, the lengths a, b, c, and d are measured by imaging the cross section of the longitudinal direction of the fat lump composition using a digital camera and a scale (for example, manufactured by SHIBUYA OPTICAL CO., LTD., a glass standard scale of 100 mm, 500 equal division line width of 0.005 mm) and using image processing software (for example, ImageJ).

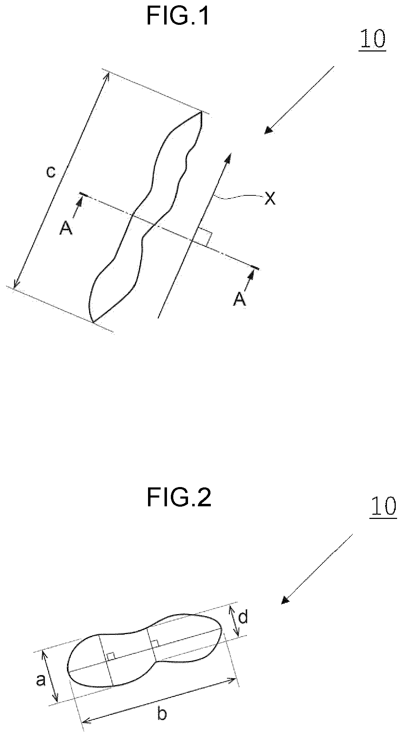

Next, the lengths a, b, c, and d will be described with reference to Fig. 1. The fat lump composition of the disclosure is not limited to those illustrated in Figs. 1 and 2.

Fig. 1 is a top view illustrating an embodiment of a specific fat lump composition, and Fig. 2 is a cross-sectional view taken along A-A of the specific fat lump composition illustrated in Fig. 1.

As illustrated in Fig. 1, the line A-A is perpendicular to the longitudinal direction (the direction of the arrow X in Fig. 1) of a specific fat lump composition 10.

In Fig. 1, a length of the specific fat lump composition 10 in the longitudinal direction is indicated by the reference sign c.

Fig. 2 illustrates a cross section perpendicular to the longitudinal direction of the fat lump composition 10.

In the cross section perpendicular to the longitudinal direction of the fat lump composition 10 (cross section taken along A-A), a length of a line having a maximum length between two points is indicated by the reference sign b in Fig. 2.

In the cross section perpendicular to the longitudinal direction of the fat lump composition 10 (cross section taken along A-A), a length of a line having a maximum length among lines perpendicular to the line having the maximum length between the two points is indicated by the reference sign a in Fig. 2.

In the cross section perpendicular to the longitudinal direction of the specific fat lump composition 10 (cross section taken along A-A), a length of a line having a minimum length among lines which are perpendicular to the line having the maximum length between the two points and have a ratio of a length to the line having the maximum length between the two points of 0.10 or more is indicated by the reference sign d in Fig. 2.

(Granular Material)

-Composition of Granular Material-

A granular material contains an oil and/or fat, and contains water and other additives, as necessary.

· Oil and/or Fat

Examples of the oil and/or fat contained in the granular material include a vegetable oil and/or fat, an animal oil and/or fat, and a fatty acid.

The fatty acid is a monovalent carboxylic acid of a long chain hydrocarbon and is represented by General Formula $C_nH_mCOOH$ (n and m each are an integer of 1 or more).

Examples of the vegetable oil and/or fat include rapeseed oil, soybean oil, palm oil, olive oil, palm oil, rice oil, corn oil, coconut oil, and canola oil.

Examples of the animal oil and/or fat include beef tallow, lard, whale oil, and fish oil.

Examples of the fatty acid include saturated fatty acids such as lauric acid, stearic acid, isostearic acid, palmitic acid, myristic acid, arachidic acid, and behenic acid; and unsaturated fatty acids such as oleic acid, linoleic acid, $\alpha$-linolenic acid, eicosenoic acid, and erucic acid.

The oil and/or fat contained in the granular material is preferably at least one selected from coconut oil, olive oil, palm oil, canola oil, or oleic acid from the viewpoint of increasing a release amount of oily contents when the fat lump composition is chewed.

A melting point of the oil and/or fat is preferably 0.1°C or higher, more preferably from 1°C to 30°C, still more preferably from 2°C to 25°C, and particularly preferably form 5°C to 25°C.

When the melting point of the oil and/or fat is 1°C or higher, the granular material is more easily formed in production of a fat lump composition described below. When the melting point of the oil and/or fat is 1°C or higher, a structure of the fat lump composition becomes a structure similar to the structure of fat contained in livestock meat. As a result, during chewing, similar to the fat of livestock meat, oily contents are easily released from the fat lump composition.

When the melting point of the oil and/or fat is 30°C or lower, in production of a fat lump composition described below, a fat lump composition containing water in a granular material is easily produced at room temperature (for example, 25°C), and a production process is easily simplified.

The melting point of the oil and/or fat is measured in accordance with "Standard Methods for the Analysis of Fats, Oils and Related Materials 2.2.4.2 (1996) published by Japan Oil Chemists' Society, 1996 edition".

A content of the oil and/or fat is preferably from 10% by mass to 98% by mass, more preferably from 20% by mass to 95% by mass, and still more preferably from 25% by mass to 90% by mass, with respect to a total mass of the fat lump composition.

· Water

In a certain application, it is preferable that the granular material contains water.

The water may be any water that can be used for food, and is not particularly limited.

In a case in which the granular material contains water, when the fat lump composition is chewed, water is also released from the fat lump composition in addition to the oil and/or fat, the texture may tend to be closer to that of fat contained in livestock meat.

In the case in which the granular material contains water, it becomes easier to incorporate a water-soluble component (for example, a seasoning such as umami ingredients, a flavor, or the like) into the granular material, and it becomes easier to create a texture close to that of fat contained in livestock meat.

A content of the water is preferably from 1% by mass to 90% by mass, more preferably from 5% by mass to 70% by mass, and still more preferably from 10% by mass to 50% by mass, with respect to the amount of the oil and/or fat contained in the granular material.

· Other Additives

Examples of the other additives include a seasoning, an acidulant, a bittering agent, a spice, a sweetener, an antioxidant, a colorant, a color coupler, a flavor, a stabilizer, and a preservative.

A content of the other additives is preferably from 0% by mass to 5% by mass with respect to a total mass of the granular material.

-Characteristics of Granular Material-

· Average Particle Diameter of Granular Materials
An average particle diameter of the granular materials is preferably from 50 $\mu$m to 500 $\mu$m, more preferably from 50 $\mu$m to 400 $\mu$m, and still more preferably from 90 $\mu$m to 300 $\mu$m.
By setting the average particle diameter of the granular materials to 50 $\mu$m or more, the release amount of oily contents is easily improved when the fat lump composition is chewed.
By setting the average particle diameter of the granular materials to 500 $\mu$m or less, the particle diameter of the granular material becomes small, and thus, when the fat lump composition is visually observed, it is difficult to visually recognize that a large number of granular materials are contained in the fat lump composition. Therefore, an appearance of the fat lump composition is closer to an appearance of fat contained in the livestock meat.
By setting the average particle diameter of the granular materials to 500 $\mu$m or less, the particle diameter of the granular material becomes small, and thus, the texture of the fat lump composition tends to be smooth when eaten. Therefore, the texture of the fat lump composition tends to be better.
The average particle diameter of the granular materials is measured by observing the fat lump composition with a transmission optical microscope.
As the transmission microscope, for example, an inverted microscope (product name: Axio Observer.Z1) manufactured by Carl Zeiss AG or the like can be used.
Hereinafter, a measurement procedure of the particle diameter of the granular material will be described.
The fat lump composition is immersed in a 100 mM aqueous solution of sodium ethylenediamine-N,N,N',N'-tetraacetate (manufactured by Wako Pure Chemical Industries, Ltd.) for 1 hour, and after 1 hour, the suspended granular materials are separated by specific gravity to collect the granular materials from the fat lump composition, and the granular materials are placed on a polystyrene petri dish of 60 mm$\varphi$. At this time, the collected granular materials are prevented from overlapping in a depth direction of the petri dish. The granular materials collected in the petri dish are observed with a transmission optical microscope and imaged at an objective magnification of 5 times. 200 or more images of the granular materials contained in a screen obtained by imagining were selected, and an equivalent circle diameter of each granular material (a diameter of a perfect circle corresponding to an area of the image of the granular material) was calculated by image processing software (for example, ImageJ). An arithmetic average value of the calculated equivalent circle diameters of the granular materials is calculated, and the arithmetic average value is defined as an average particle diameter of the granular materials.

· CV Value of Particle Diameter of Granular Material

A coefficient of variation (CV) value of the particle diameter of the granular material is preferably 30% or less, more preferably 25% or less, and still more preferably 20% or less.
A granular material having a small particle diameter contains a small amount of the oil and/or fat. Therefore, when the granular material having a small particle diameter is contained, the release amount of oily contents tends to be small when the fat lump composition is chewed. Since a granular material having a large particle diameter is unstable, the oil and/or fat easily leaks from the granular material when cooking such as heat cooking is performed.
From the above, the oil and/or fat is stably retained while containing a large amount of oil and/or fat at the time of storage, but in order to obtain a fat lump composition having a large release amount of oily contents at the time of chewing, it is preferable that a variation in particle diameter due to the presence of granular materials having a small particle diameter and granular materials having a large particle diameter is small. That is, a particle diameter distribution of the granular materials contained in the fat lump composition is preferably narrow.
By setting the CV value of the particle diameter of the granular material to 30% or less, the particle diameter of the particle material contained in the fat lump composition tends to be close to uniform. Therefore, the fat lump composition tends to release a large amount of oily contents at the time of chewing.
The CV value of the particle diameter is a value determined by the following equation.

CV value (%) of particle diameter = (Standard deviation of equivalent circle diameter of granular material/Average particle diameter of granular materials) $\times$ 100

The average particle diameter of the granular materials is a value measured by the method described above.
A standard deviation of the equivalent circle diameter of the granular material is a standard deviation of an equivalent circle diameters of 200 granular materials calculated in the measurement of the average particle diameter of the granular materials.

(Ionically Crosslinkable Polymer)

The fat lump composition contains an edible ionically crosslinkable polymer that is crosslinked with a cation

The term "edible" means a property that does not adversely affect a health condition when orally ingested by a human.

The term "ionically crosslinkable polymer" means a polymer that is crosslinked by a reaction with an ion.

Examples of the edible ionically crosslinkable polymer include a polysaccharide having at least one selected from the group consisting of a carboxy group, a carboxylic acid anion group (-COO⁻), a sulfo group, and a sulfonic acid anion group (-$SO_3^-$).

Examples of the edible ionically crosslinkable polymer include alginic acid, carrageenan, low methoxyl (LM pectin), high methoxyl (HM pectin), and deacylated (LA) gellan gum.

From the viewpoint of improving the heat resistance of the fat lump composition, the edible ionically crosslinkable polymer is preferably at least one selected from the group consisting of alginic acid, LM pectin, and LA gellan gum.

A viscosity of an aqueous solution containing 1% by mass of the edible ionically crosslinkable polymer (an aqueous solution containing 1% by mass of the ionically crosslinkable polymer with respect to the entire aqueous solution) is preferably from 10 mPa·s to 3,000 mPa·s, and more preferably from 20 mPa·s to 1,000 mPa·s.

The viscosity of the aqueous solution containing 1% by mass of the edible ionically crosslinkable polymer is a value measured by a tuning fork vibration type viscometer under a temperature condition of 20°C.

As the tuning fork vibration type viscometer, for example, SV-10 (manufactured by A&D Company, Limited) can be used.

The cation is preferably a metal ion having an ionic valence of 2 or higher.

Examples of the metal ion include divalent metal ions such as a calcium ion, a magnesium ion, an iron(II) ion, a copper(II) ion, a zinc ion, and a manganese ion, and trivalent metal ions such as an aluminum ion and an iron(III) ion.

From the viewpoint of obtaining a stable crosslinked structure, the metal ion is preferably at least one selected from a calcium ion, a magnesium ion, or a zinc ion, and more preferably a calcium ion.

A content of the edible ionically crosslinkable polymer that is crosslinked with a cation is preferably from 0.01% by mass to 20% by mass, more preferably from 0.1% by mass to 10% by mass, and still more preferably from 0.5% by mass to 5% by mass, with respect to the total mass of the fat lump composition.

(Surfactant)

It is preferable that the fat lump composition contains a surfactant.

In a case in which the fat lump composition contains a surfactant, the release amount of the oil and/or fat is further increased when the fat lump composition after heat cooking is chewed. The reason is presumed as follows.

In a case in which the granular materials in the fat lump composition are in contact with each other, the oil and/or fat easily leaks from the granular material during heat cooking. In this case, when the fat lump composition after heat cooking is chewed, the release amount of the oil and/or fat is easily reduced.

In a case in which a surfactant is contained, the granular material and the ionically crosslinkable polymer are easily compatible with each other, and the ionically crosslinkable polymer is easily present in gaps between the granular materials. In this case, the granular materials are likely to have an appropriate distance from each other, and the leakage of the oil and/or fat from the granular material can be suppressed during heat cooking. As a result, when the fat lump composition after heat cooking is chewed, the release amount of the oil and/or fat increases.

Examples of the surfactant include an edible surfactant.

Examples of the edible surfactant include glycerin fatty acid ester, polyglycerin fatty acid ester, organic acid monoglyceride, sorbitan fatty acid ester, propylene glycol fatty acid ester, sucrose fatty acid ester, polyglycerin condensed ricinoleic acid ester, and lecithin.

It is preferable that the glycerin fatty acid ester contains a monoglyceride as a main component.

The main component means that a content of the monoglyceride is 90% by mass or more with respect to the entire glycerin fatty acid ester.

The monoglyceride is preferably a monoesterified product of a saturated or unsaturated fatty acid having from 2 to 24 carbon atoms and glycerin.

Examples of the fatty acid include behenic acid, stearic acid, and palmitic acid.

The glycerin fatty acid ester may contain a diglyceride.

The diglyceride is preferably a diesterified product of a saturated or unsaturated fatty acid having from 2 to 24 carbon atoms and glycerin.

The polyglycerin fatty acid ester is preferably an esterified product of a saturated or unsaturated fatty acid having from 2 to 24 carbon atoms and polyglycerin.

Specific examples of the polyglycerin fatty acid ester include polyglyceryl monomyristate, polyglyceryl dimyristate, polyglyceryl trimyristate, polyglyceryl monopalmitate, polyglyceryl dipalmitate, polyglyceryl tripalmitate, polyglyceryl monostearate, polyglyceryl distearate, polyglyceryl tristearate, polyglyceryl monoisostearate, polyglyceryl diisostearate, polyglyceryl triisostearate, polyglyceryl monooleate, polyglyceryl dimonooleate, and polyglyceryl trimonooleate.

The organic acid monoglyceride is obtained by esterifying a hydroxyl group derived from glycerin of a monoglyceride using an organic acid.

Examples of the organic acid include citric acid, succinic acid, acetic acid, and lactic acid, citric acid and succinic acid are preferable, and citric acid is more preferable.

The sorbitan fatty acid ester refers to an esterified product of sorbitan and a fatty acid.

The sorbitan fatty acid ester is preferably an esterified product of sorbitan and a saturated or unsaturated fatty acid having from 2 to 18 carbon atoms.

Specific examples of the sorbitan fatty acid ester include sorbitan monocaprate, sorbitan monolaurate, sorbitan monopalmitate, sorbitan monostearate, sorbitan distearate, sorbitan sesquistearate, sorbitan tristearate, sorbitan trioleate, sorbitan monoisostearate, sorbitan sesquiisostearate, sorbitan monooleate, sorbitan sesquioleate, and sorbitan coconut oil fatty acid.

The propylene glycol fatty acid ester is an esterified product of a fatty acid and propylene glycol.

As the fatty acid used for the synthesis of the propylene glycol fatty acid ester, a saturated or unsaturated fatty acid having from 2 to 24 carbon atoms is preferable.

Specific examples of the propylene glycol fatty acid ester include propylene glycol palmitate, propylene glycol stearate, and propylene glycol behenate.

The sucrose fatty acid ester is an esterified product of sucrose and a fatty acid.

As the fatty acid used for the synthesis of the sucrose fatty acid ester, a saturated or unsaturated fatty acid having from 2 to 24 carbon atoms is preferable.

The sucrose fatty acid ester is preferably an esterified product of sucrose and one or two or more fatty acids selected from the group consisting of caprylic acid, capric acid, lauric acid, myristic acid, palmitic acid, palmitoleic acid, stearic acid, oleic acid, arachidic acid, and behenic acid.

The polyglycerin condensed ricinoleic acid ester is an esterified product of polyglycerin fatty acid ester and a ricinoleic acid condensate.

Specific examples of the polyglycerin condensed ricinoleic acid ester include an esterified product of the compound described as a specific example of the polyglycerin fatty acid ester described above, and a ricinoleic acid condensate.

Lecithin refers to phosphatidylcholine itself or a mixture containing at least phosphatidylcholine.

The mixture containing at least phosphatidylcholine is generally a mixture that can contain, in addition to phosphatidylcholine, phosphatidylserine, phosphatidylethanolamine, phosphatidylinositol, N-acylphosphatidylethanolamine, phosphatidylglycerol, phosphatidic acid, lysophosphatidylcholine, lysophosphatidic acid, sphingomyelin, sphingoethanolamine, and the like.

As the lecithin, enzymatically decomposed lecithin (so-called lysolecithin) can be used.

The enzymatically decomposed lecithin is a composition containing lysophosphatidylcholine in which one fatty acid of a phosphatidylcholine molecule is lost by an enzyme such as phospholipase. Note that, in the fat lump composition, the enzymatically decomposed lecithin includes so-called hydrogenated enzymatically decomposed lecithin in which oxidation stability is improved by performing hydrogenation to convert a conjugated fatty acid into a saturated fatty acid.

The surfactants may be used singly, or in combination of two or more kinds thereof.

A hydrophilic-hydrophobic balance (HLB) value of the surfactant is, for example, preferably 8 or more, more preferably 10 or more, and still more preferably 12 or more, from the viewpoint of emulsion dispersibility.

An upper limit of the HLB value of the emulsifier is not particularly limited, and is generally 20 or less, and preferably 18 or less. The HLB value of the emulsifier is preferably from 8 to 20.

HLB usually means a hydrophilic-hydrophobic balance used in the field of surfactants. The HLB value is calculated using the following Kawakami equation. Note that in a case in which a commercially available product is used as the surfactant, commercially available catalog data is preferentially adopted.

$$HLB = 7 + 11.7\log(Mw/Mo)$$

Mw represents a molecular weight of a hydrophilic group of the surfactant, and Mo represents a molecular weight of a hydrophobic group of the surfactant.

The hydrophobic group of the surfactant is an atomic group having low affinity with water. Examples of the hydrophobic group include an alkyl group, an alkenyl group, an alkylsilyl group, and a perfluoroalkyl group. Specifically, in a case in which the surfactant is the "glycerin fatty acid ester, polyglycerin fatty acid ester, organic acid monoglyceride, sorbitan fatty acid ester, propylene glycol fatty acid ester, sucrose fatty acid ester, polyglycerin condensed ricinoleic acid ester, or lecithin" described above, the hydrophobic group refers to an alkyl group or alkenyl group derived from a fatty acid.

The hydrophilic group of the surfactant is an atomic group having high affinity with water. Specifically, the hydrophilic group of the surfactant refers to an atomic group other than a hydrophobic group in the structure of the surfactant.

A Hansen solubility parameter (HSP) distance between the ionically crosslinkable polymer and the hydrophilic part of the surfactant is preferably 10 or less, more preferably 9 or less, and still more preferably 8 or less.

When the granular materials in the fat lump composition are in contact with each other, the oil and/or fat easily leaks from the granular material during heat cooking. **In** this case, when the fat lump composition after heat cooking is chewed, the release amount of the oil and/or fat is easily reduced.

In a case in which the HSP distance between the ionically crosslinkable polymer and the hydrophilic part of the surfactant is within the above numerical range, the ionically crosslinkable polymer is likely to be present in the gaps between the granular materials. In this case, the granular materials are likely to have an appropriate distance from each other, and the oil and/or fat is less likely to leak from the granular material during heat cooking. Accordingly, when the fat lump composition after heat cooking is chewed, the release amount of the oil and/or fat increases.

The HSP distance can be adjusted by changing the structure of the ionically crosslinkable polymer and the hydrophilic part of the surfactant.

The HSP distance is a combination of three kinds of cohesive energy density values ($\delta D$: dispersion term, $\delta P$: dispersion electrode, and $\delta H$: hydrogen bond term), and each unit is $[J/cm^3]^{1/2}$.

The HSP distance is calculated as follows.

The HSP distance can be obtained as a registered value or an estimated value in HSPiP 4th Edition version 4.0.04, which is commercially available software.

This software can be obtained from a site http://hansen-solubility.com/index.html or the like. In order to obtain the HSP on the basis of such software, it is possible to obtain HSP on the basis of the document (for example, C. M. Hansen solubility parameteres: a user7S handbook 2nd edition, CEC press, 2007, ISBN-10: 0849372488) by Hansen et al.

A content of the surfactant is preferably from 0.05% by mass to 2% by mass, and more preferably from 0.10% by mass to 1% by mass, with respect to the total mass of the fat lump composition.

(Gel Containing Edible Ionically Crosslinkable Polymer Crosslinked With Cation)

It is preferable that the fat lump composition contains a gel containing an edible ionically crosslinkable polymer that is crosslinked with a cation.

The gel refers to a gel that contains at least water and an edible ionically crosslinkable polymer that is crosslinked with a cation, and exhibits a behavior as an elastic solid.

In a case in which the fat lump composition contains a gel, it becomes easier to maintain a state in which the granular materials have an appropriate distance from each other. Therefore, the oil and/or fat is less likely to leak from the granular material during heat cooking. Accordingly, when the fat lump composition after heat cooking is chewed, the release amount of the oil and/or fat tends to increase.

It is preferable that the gel contains at least an edible ionically crosslinkable polymer that is crosslinked with a cation and water, and contains an edible ionically crosslinkable polymer that is crosslinked with a cation and other additives other than water, as necessary.

As the edible ionically crosslinkable polymer that is crosslinked with a cation contained in the gel, the edible ionically crosslinkable polymer that is crosslinked with a cation described above is applied.

The water contained in the gel may be any water that can be used for food, and is not particularly limited.

Examples of the other additives contained in the gel include a seasoning, an acidulant, a bittering agent, a spice, a sweetener, an antioxidant, a colorant, a color coupler, a flavor, a stabilizer, and a preservative.

A content of the edible ionically crosslinkable polymer crosslinked with a cation in the gel is preferably from 0.1% by mass to 10% by mass, more preferably from 0.2% by mass to 5% by mass, and still more preferably from 0.5% by mass to 3% by mass, with respect to a total mass of the gel.

A content of the other additives in the gel is preferably from 0% by mass to 20% by mass with respect to a total mass of the gel.

A ratio of a volume of the gel to a volume of the granular material is preferably from 10% to 300%, more preferably from 30% to 200%, and still more preferably from 50% to 150%.

The volume of the gel to the volume of the granular material is measured as follows.

First, the volume of the fat lump composition is measured using a laser volumetric meter. As the laser volumetric meter, for example, VL-300 manufactured by KEYENCE CORPORATION can be used.

Thereafter, the granular materials are collected from the fat lump composition by the procedure described in the measurement procedure of the average particle diameter of the granular materials, and the collected granular materials are allowed to stand under a condition of 50°C for 1 hour to integrate the granular materials, and then a volume thereof is measured by a volumetric meter. As the volumetric meter, for example, a measuring cylinder can be used.

The volume of the gel is determined by the following equation.

$$\text{Volume of gel} = [(\text{Volume (m}^3\text{) of fat lump composition} - \text{Volume (m}^3\text{) of granular material)})/\text{Volume (m}^3\text{) of fat lump composition}] \times 100 \qquad \text{Equation:}$$

The specific fat lump composition can be produced by a method of producing a fat lump composition described below. Note that the method of producing a specific fat lump composition is not particularly limited, and the specific fat lump composition may be cut so that b/a is 2.00 or more after bringing a liquid containing an edible ionically crosslinkable polymer and a granular material containing an oil and/or fat into contact with a liquid containing a cation in a stainless steel vat or the like to crosslink the edible ionically crosslinkable polymer.

<Fat Lump Mixture>

A fat lump mixture according to an embodiment of the disclosure contains a specific fat lump composition, in which a content of the specific fat lump composition is 30% by mass or more with respect to a total mass of the fat lump mixture.

From the viewpoint of brining the appearance of the meat alternative closer to the appearance of the chunk of meat, a content of the specific fat lump composition is preferably 50% by mass or more, and more preferably from 90% by mass to 99% by mass, with respect to a total mass of the fat lump mixture.

The fat lump mixture may contain two or more kinds of specific fat lump compositions.

The fat lump mixture of the disclosure may contain a fat lump composition other than the specific fat lump composition.

From the viewpoint of brining the appearance of the meat alternative closer to the appearance of the chunk of meat, a content of the fat lump composition other than the specific fat lump composition is preferably 70% by mass or less, more preferably from 50% by mass or less, and still more preferably from 0.1% by mass to 10% by mass, with respect to a total mass of the fat lump mixture.

The fat lump mixture may contain additives such as a seasoning, an acidulant, a bittering agent, a spice, a sweetener, an antioxidant, a colorant, a color coupler, a flavor, a stabilizer, and a preservative.

<Meat alternative>

A meat alternative according to an embodiment of the disclosure contains a lean-like portion containing a protein, and the specific fat lump composition or the fat lump mixture.

(Lean-Like portion)

The lean-like portion refers to a portion corresponding to a portion that looks lean in a meat-like meat alternative.

It is preferable that the lean-like portion contains a protein, and contains an oil and/or fat, a binder, and other additives, as necessary.

-Protein-

The lean-like portion contains a protein.

The protein preferably contains at least one of a vegetable protein or an animal protein, and more preferably contains a vegetable protein.

The vegetable protein is a protein collected from a plant.

The vegetable protein is not particularly limited as long as the vegetable protein is a protein collected from a plant. Examples of the origin of the vegetable protein include cereals such as wheat, barley, oats, rice, and corn; beans such as soybean, pea, red bean, chickpea, lentil, broad bean, mung bean, and lupin bean; seeds such as almond, peanut, cashew nut, pistachio, hazelnut, macadamia nut, linseed, sesame, rapeseed, cottonseed, safflower, and sunflower; potatoes such as potato, sweet potato, yam, artichoke, and cassava; vegetables such as asparagus, artichoke, cauliflower, broccoli, and green soybean; fruits such as banana, jack fruit, kiwi fruit, coconut, avocado, and olive; mushrooms such as mushroom, Eryngii mushroom, shiitake mushroom, shimeji mushroom, and maitake mushroom; and algae such as chlorella, spirulina, euglena, laver, kelp, seaweed, agar, hijiki, and mozuku. Among them, the origin of the vegetable protein is preferably at least one selected from the group consisting of wheat, soybean, pea, and rice, and is more preferably at least one selected from the group consisting of soybean and wheat, from the viewpoint of obtaining a meat alternative having an appearance and texture similar to those of chunk of meat.

The vegetable protein may contain one kind of plant-derived protein, or may contain two or more kinds of plant-derived proteins.

The animal protein is a protein collected from an animal.

The animal protein is not particularly limited as long as the animal protein is a protein collected from an animal. Examples of the animal protein include collagen, gelatin, keratin, fibroin, sericin, casein, conchiolin, elastin, protamine, egg yolk protein, and egg white protein.

The animal protein may contain one kind of animal protein, or may contain two or more kinds of animal proteins.

From the viewpoint of obtaining a meat alternative having a texture closer to that of livestock meat, it is preferable that the protein has a muscle-like texture.

The muscle-like texture refers to a texture that has a structure similar to that of a bundle of fibers and can be split into a fibrous shape in a certain direction.

Lean of livestock meat is derived from muscle. The muscle is composed of a bundle of muscle fibers. Therefore, the lean of the livestock meat has a structure like a bundle of fibers. Since the lean-like portion of the meat alternative according to the present embodiment has a muscle-like texture, it is possible to create a texture brought about by the presence of muscle fibers felt when eating livestock meat.

Examples of a method of imparting a muscle-like texture to a protein include a method of extruding a protein (water and the like may be added together with the protein, if necessary) by an extruder.

In the case in which the protein is extruded, the protein has a structure similar to that of a bundle of fibers along an extrusion direction of the extruder, and has a texture that can be split into a fibrous shape in the extrusion direction of the extruder.

A content of the protein is preferably from 50% by mass to 100% by mass, more preferably from 60% by mass to 95% by mass, and still more preferably from 70% by mass to 90% by mass, with respect to a total mass of the lean-like portion.

It is preferable that the meat alternative according to an embodiment of the disclosure contains a fiber bundle-shaped textured protein.

The fiber bundle-shaped textured protein is a protein having a certain fiber bundle-shaped texture.

The fiber bundle shape refers to a structure similar to a bundle of fibers extending one direction.

The fiber bundle-shaped textured protein is preferably a fiber bundle-shaped textured protein having a muscle-like texture from the viewpoint of the shape and texture.

The muscle-like texture refers to a texture that has a structure similar to that of a bundle of fibers and can be split in one direction.

Among them, the muscle-like texture is preferably a texture that has a structure similar to a bundle of fibers and can be split into fibers in one direction.

Lean of livestock meat is derived from muscle. The muscle is composed of a bundle of muscle fibers. Therefore, the lean of the livestock meat has a structure like a bundle of fibers. In a case in which the fiber bundle-shaped textured protein having a muscle-like texture is applied to the meat alternative according to an embodiment of the disclosure, it is possible to obtain a meat alternative having a texture closer to that of livestock meat.

The fiber bundle-shaped textured protein is preferably composed of a vegetable protein.

The vegetable protein has the same meaning as described above, and also has the same preferred aspect described above.

The vegetable protein may contain one kind of plant-derived protein, or may contain two or more kinds of plant-derived proteins.

Examples of the fiber bundle-shaped textured protein having a muscle-like texture include a spongy fiber bundle-shaped textured protein and a fibrous fiber bundle-shaped textured protein.

The spongy refers to an isotropic porous structure in appearance.

The fibrous refers to an anisotropic fiber structure in appearance.

The isotropic porous structure refers to a structure in which a pore shape on a cut surface obtained by cutting at an arbitrary position is substantially elliptical and is approximately the same regardless of a direction.

An anisotropic fiber structure refers to a structure in which a cut surface obtained by cutting at an arbitrary position is fibrous. The fiber bundle-shaped textured protein preferably has a hole shape, and the hole shape has a structure different from a substantially elliptical shape or a substantially fibrous shape depending on the cutting direction.

Examples of a method of observing the cut surface include a method of cutting a section and observing the section with a microscope and a method of observing the section with X-ray computed tomography (CT).

It is preferable that the meat alternative according to an embodiment of the disclosure contains a fiber bundle-shaped textured protein in which a fiber axis direction of the fiber bundle-shaped textured protein is oriented in one direction in an adjacent region.

The fiber axis direction of the fiber bundle-shaped textured protein means an orientation of a longitudinal direction of fibers forming the muscle-like texture.

The case in which the fiber axis direction of the fiber bundle-shaped textured protein is oriented in one direction in the adjacent region includes a case in which the fiber axis directions of some fiber bundle-shaped textured proteins are different in the adjacent region, but the fiber axis direction of the fiber bundle-shaped textured protein may be oriented in a constant direction as a whole, or may be oriented in one direction in the adjacent region while having a fluctuation as a whole.

The spongy textured protein having an isotropic porous structure is also formed into a fiber bundle-shaped textured protein by a method of loosening a protein into a fiber shape or a method of cutting a protein into a fiber shape.

From the viewpoint of the appearance or the texture, the fiber bundle-shaped textured protein contained in the meat alternative is more preferably a fibrous fiber bundle-shaped textured protein.

A content of the fiber bundle-shaped textured protein is preferably from 5% by mass to 95% by mass, more preferably from 7% by mass to 90% by mass, and still more preferably from 10% by mass to 85% by mass, with respect to a total mass of the meat alternative.

-Oil and/or fat-

The lean-like portion may contain an oil and/or fat.

Examples of the oil and/or fat include a vegetable oil and/or fat, and an animal oil and/or fat.

Examples of the vegetable oil and/or fat include the same ones as those described in the description of the fat lump composition.

Examples of the animal oil and/or fat include beef tallow, lard, whale oil, and fish oil.

-Binder-

It is preferable that the lean-like portion contains a binder, as necessary.

In a case in which the lean-like portion contains a binder, the lean-like portion easily maintains one integrated shape.

The binder is not particularly limited as long as the binder is edible and can maintain the shape of the lean-like portion.

Examples of the binder include a protein, a thickening polysaccharide, and a starch.

The protein used as the binder may be the same as or different from the protein contained in the lean-like portion.

Examples of the protein used as the binder include a vegetable protein, an animal protein, and an enzyme.

Examples of the vegetable protein used as the binder include proteins derived from wheat, soybean, and rice.

Examples of the animal protein used as the binder include a milk protein and egg white.

Examples of the enzyme include transglutaminase.

Examples of the thickening polysaccharide include carrageenan, xanthan gum, pectin, locust bean gum, curdlan, guar gum, tragacanth gum, arabic gum, gellan gum, tamarind seed gum, cassia gum, tara gum, alginic acid, agar, glucomannan, soybean polysaccharide, gelatin, pullulan, psyllium, chitosan, methyl cellulose, hydroxypropyl methyl cellulose, hydroxyethyl cellulose, carboxymethyl cellulose, and dextrin.

Examples of the starch include wheat starch, cassava starch, rice starch, glutinous rice starch, corn starch, waxy corn starch, sago starch, potato starch, arrowroot starch, lotus root starch, green bean starch, sweet potato starch, waxy potato starch, waxy cassava starch, and waxy wheat starch.

It is preferable that the binder contains a polysaccharide including a thermally irreversible gel-forming polysaccharide and a thermally reversible gel-forming polysaccharide, and a gelation retardant.

-Thermally Irreversible Gel-Forming Polysaccharide-

A thermally irreversible gel is a gel that maintains a shape thereof even when heated once a general gel (in this paragraph, the term "gel" refers to a gel that contains at least water and a thermally irreversible gel-forming polysaccharide and exhibits a behavior as an elastic solid) is formed.

The thermally irreversible gel-forming polysaccharide is a polysaccharide that forms a thermally irreversible gel.

As the thermally irreversible gel-forming polysaccharide, a polysaccharide that is crosslinked by a reaction with a cation is preferable from the viewpoint of solubility before gelation.

The cation as a gelling agent is preferably a metal ion having an ionic valence of 2 or higher.

Examples of the metal ion include divalent metal ions such as a calcium ion, a magnesium ion, an iron(II) ion, a copper(II) ion, a zinc ion, and a manganese ion, and trivalent metal ions such as an aluminum ion and an iron(III) ion.

From the viewpoint of obtaining a stable crosslinked structure, the metal ion is preferably at least one selected from a calcium ion, a magnesium ion, or a zinc ion, and more preferably a calcium ion.

Examples of the thermally irreversible gel-forming polysaccharide include a polysaccharide having at least one selected from the group consisting of a carboxy group, a carboxylic acid anion group ($-COO^-$), a sulfo group, and a sulfonic acid anion group ($-SO_3^-$).

Examples of the thermally irreversible gel-forming polysaccharide include alginic acid, LM pectin, and LA gellan gum.

From the viewpoint of improving moldability and heat resistance of a gel, the thermally irreversible gel-forming polysaccharide is preferably at least one selected from the group consisting of alginic acid and pectin.

A viscosity of an aqueous solution containing 1% by mass of the thermally irreversible gel-forming polysaccharide (an aqueous solution containing 1% by mass of the thermally irreversible gel-forming polysaccharide with respect to the entire aqueous solution) is preferably from 10 mPa·s to 3,000 mPa·s, and more preferably from 20 mPas to 1,000 mPas.

The viscosity of the aqueous solution containing 1% by mass of the thermally irreversible gel-forming polysaccharide is a value measured by a tuning fork vibration type viscometer under a temperature condition of 20°C.

As the tuning fork vibration type viscometer, for example, SV-10 (manufactured by A&D Company, Limited) can be used.

A content of the thermally irreversible gel-forming polysaccharide is preferably from 10% by mass to 90% by mass, more preferably from 20% by mass to 80% by mass, and still more preferably from 30% by mass to 70% by mass, with respect to a total mass of the binder.

-Thermally Reversible Gel-Forming Polysaccharide-

A thermally reversible gel is a gel that maintains a state thereof (in this paragraph, the term "gel" refers to a gel that contains at least water and a thermally reversible gel-forming polysaccharide and exhibits a behavior as an elastic solid) at room temperature (25°C) and is melted and liquefied (solated) when heat is applied.

The thermally reversible gel-forming polysaccharide is a polysaccharide that forms a thermally reversible gel.

Examples of the thermally reversible gel-forming polysaccharide include agar, carrageenan, furcellan, native gellan gum, locust bean gum, xanthan gum, guar gum, psyllium seed gum, glucomannan, tara gum, and tamarind seed gum.

The thermally reversible gel-forming polysaccharide is preferably carrageenan from the viewpoint of maintaining the shape of the meat alternative after heat cooking and the texture.

A content of the thermally reversible gel-forming polysaccharide is preferably from 10% by mass to 90% by mass, more preferably from 20% by mass to 80% by mass, and still more preferably from 30% by mass to 70% by mass, with respect to the entire binder.

--Combination of Thermally Irreversible Gel-Forming Polysaccharide and Thermally Reversible Gel-Forming Polysaccharide--

Examples of a preferred combination of the thermally irreversible gel-forming polysaccharide and the thermally reversible gel-forming polysaccharide include a combination in which a thermally irreversible gel-forming polysaccharide is at least one selected from the group consisting of alginic acid and pectin and a thermally reversible gel-forming polysaccharide is carrageenan.

-Gelation Retardant-

It is preferable that the binder contains a gelation retardant.

The gelation retardant is a compound having a function of suppressing gelation of a thermally irreversible gel-forming polysaccharide or a thermally reversible gel-forming polysaccharide.

The gelation retardant is preferably a compound having a function of suppressing gelation of a thermally irreversible gel-forming polysaccharide from the viewpoint of maintaining the shape of the meat alternative after heat cooking and the texture.

The gelation retardant is preferably a chelating agent from the viewpoint of maintaining the shape of the meat alternative after heat cooking and the texture.

As the chelating agent, a known chelating agent can be suitably used.

Examples of the chelating agent include oxycarboxylic acids such as tartaric acid, citric acid, and gluconic acid; aminocarboxylic acids such as iminodiacetic acid (IDA), nitrilotriacetic acid (NTA), and ethylenediaminetetraacetic acid (EDTA); condensed phosphoric acids such as pyrophosphoric acid and tripolyphosphoric acid; and salts thereof.

Among them, the chelating agent is preferably condensed phosphoric acid or a salt thereof, and more preferably pyrophosphoric acid or pyrophosphate, from the viewpoint of maintaining the shape of the meat alternative after heat cooking and the texture and the viewpoint of the flavor of the meat alternative.

A content of the gelation retardant is preferably from 0.1% by mass to 20% by mass, more preferably from 0.5% by mass to 15% by mass, and still from 0.3% by mass to 10% by mass, with respect to a total mass of the polysaccharide including the thermally irreversible gel-forming polysaccharide and the thermally reversible gel-forming polysaccharide.

A content of the binder contained in the lean-like portion is preferably from 0.01% by mass to 10% by mass with respect to a total mass of the lean-like portion.

-Other Additives-

It is preferable that the lean-like portion contains other additives other than a protein, an oil and/or fat, and a binder, as necessary.

Examples of the other additives include water, a seasoning, an acidulant, a bittering agent, a spice, a sweetener, an antioxidant, a colorant, a color coupler, a flavor, a stabilizer, and a preservative.

A content of the other additives is preferably from 0% by mass to 20% by mass.

(Fat Lump Composition or Fat Lump Mixture)

From the viewpoint of brining the appearance of the meat alternative closer to the appearance of the chunk of meat, a content of the fat lump composition or the fat lump mixture is preferably 3% by mass or more, more preferably from 5% by mass or more, and still more preferably from 7% by mass to 50% by mass, with respect to a total mass of the meat alternative.

<Method of Preparing Fat lump Composition>

A method of producing a fat lump composition according to an embodiment of the disclosure includes:

a step of bringing a liquid containing an edible ionically crosslinkable polymer and a granular material containing an oil and/or fat (hereinafter, also referred to as "specific liquid A") into contact with a liquid containing a cation (hereinafter, also referred to as "specific liquid B") to prepare a fat lump composition precursor (hereinafter, also referred to as "fat lump composition precursor preparation step"); and
a step of shaping the fat lump composition precursor (hereinafter, also referred to as "shaping step").

Since the edible ionically crosslinkable polymer and the granular material containing an oil and/or fat have been described above, the descriptions thereof are omitted here.

According to the method of producing a fat lump composition, a fat lump composition capable of producing a meat alternative having an appearance similar to that of chunk of meat can be produced. The reason is presumed as follows.

In the method of producing a fat lump composition, after the specific liquid A is brought into contact with the specific liquid B, shaping is performed. By the contact between the specific liquid A and the specific liquid B, crosslinking of the edible ionically crosslinkable polymer in the specific liquid A is started, and the crosslinked edible ionically crosslinkable polymer is shaped, such that a cross section of the fat lump composition to be produced has an elongated shape. Therefore, a meat alternative obtained by using the fat lump composition has an appearance similar to that of chunk of meat.

(Fat lump Composition Precursor Preparation Step)

In the disclosure, the fat lump composition precursor means a fat lump composition before the shaping step is performed.

By bringing the specific liquid A into contact with the specific liquid B, a part or the whole of the edible ionically crosslinkable polymer can be crosslinked. From the viewpoint of ease of shaping, it is preferable that a part of the edible ionically crosslinkable polymer is crosslinked at the time of starting shaping of the fat lump composition precursor.

The amount of specific liquid B added is preferably from 50 parts by mass to 200 parts by mass with respect to 100 parts by mass of the amount of specific liquid A added.

Examples of the specific liquid B include an aqueous solution that dissolves a salt containing a cation. Examples of the salt containing a cation include calcium chloride, calcium gluconate, and calcium lactate.

A content of the salt in the aqueous solution that dissolves a salt containing a cation is preferably from 0.5% by mass to 5% by mass with respect to a total mass of the aqueous solution.

A content of the edible ionically crosslinkable polymer is preferably from 0.5% by mass to 5.0% by mass with respect to a total mass of the specific liquid A.

A content of the granular material containing an oil and/or fat is preferably from 10% by mass to 70% by mass with respect to a total mass of the liquid containing the specific liquid A.

The specific liquid A can be prepared by a method including a step of forming droplets containing an oil and/or fat in an aqueous solution (droplet forming step), a step of solidifying the oil and/or fat in the droplets to obtain particles containing the solidified oil and/or fat (oil and/or fat solidifying step), and a step of mixing the particles and a liquid containing an edible ionically crosslinkable polymer (mixing step).

Note that the specific liquid A is not limited to be prepared by the method described above, and a commercially available product may be used.

-Droplet Forming Step-

Examples of a method of forming droplets containing an oil and/or fat in an aqueous solution include a method of dispersing an oil and/or fat in an aqueous solution.

As a method of dispersing an oil and/or fat in an aqueous solution, a method of emulsifying an aqueous solution and an oil and/or fat with an emulsifier is preferable.

Examples of the emulsifier include a rotary stirrer equipped with a propeller type, anchor type, paddle type, or turbine type stirring blade, a static type mixing machine such as a static mixer, a rotor and stator type emulsifier such as a homogenizer or CLEARMIX, a mill-type emulsifier with a grinding function, a high-pressure emulsifier such as a Manton-Gaulin type pressure emulsifier, a high-pressure nozzle emulsifier that generates cavitation under high pressure, a high-pressure collision type emulsifier that applies a shear force by colliding liquids under high pressure such as a microfluidizer, an ultrasonic emulsifier that generates cavitation using ultrasonic waves, and a membrane emulsifier that performs uniform emulsification through pores.

It is preferable to use a membrane emulsifier as the emulsifier from the viewpoint of improving the uniformity of the particle diameter of the droplets containing an oil and/or fat.

In a case in which emulsification is performed using a membrane emulsifier, the emulsification method may be either a direct membrane emulsification method or a permeate membrane emulsification method, and the direct membrane emulsification method is preferable.

As the porous membrane included in the membrane emulsifier, for example, a Shirasu Porous Glass (SPG) membrane is suitable, and can be purchased from SPG Technology Co., Ltd.

As an emulsification method using a membrane emulsifier, for example, a method of dispersing oil and/or fat in an aqueous solution containing water and a surfactant through a porous membrane is preferable.

A mass ratio of the aqueous solution used for emulsification to the oil and/or fat (aqueous solution/oil and/or fat) is preferably from 10/1 to 2/1.

-Oil and/or fat Solidifying Step-

Examples of the method of solidifying the oil in the droplets to obtain particles containing the solidified oil include a method of curing the oil using an oil curing agent, a method of cooling the oil and/or fat containing droplets, and the like. From the viewpoint of obtaining a fat lump composition that releases a large amount of oil during chewing, a method of cooling the oil and/or fat containing droplets is preferable.

Examples of the method of cooling the droplets containing an oil and/or fat include a method in which an aqueous solution containing droplets containing an oil and/or fat is cooled using a refrigerator or the like, the droplets being obtained by a step (1) of forming droplets containing an oil and/or fat in an aqueous solution.

A cooling temperature is preferably higher than 0°C and equal to or lower than a melting point of the oil and/or fat.

A cooling time is not particularly limited, and the cooling is preferably performed until the oil and/or fat contained in the droplets is solidified.

After cooling, the solidified particles containing an oil and/or fat may be gathered in a supernatant of the solution, and in this case, it is preferable to recover the supernatant containing the particles. Then, it is preferable to perform the following crosslinking step using the recovered supernatant containing the particles.

Examples of a method of recovering the supernatant containing the particles include a method in which an aqueous solution other than the supernatant containing the particles is discharged using a separatory funnel.

A content of the oil and/or fat in the aqueous solution containing the particles obtained by the oil and/or fat solidifying step is preferably from 40% by mass to 90% by mass with respect to a total mass of the solution.

-Mixing Step-

The particles obtained by the oil and/or fat solidifying step and the aqueous solution containing an edible ionically crosslinkable polymer are mixed, such that a liquid containing an edible ionically crosslinkable polymer and a granular material containing an oil and/or fat can be obtained.

From the viewpoint of brining the appearance of the meat alternative closer to the appearance of the chunk of meat, a viscosity of the specific liquid A is preferably from 30 mPa·s to 3,000 mPa·s, and more preferably from 50 mPa·s to 2,000 mPa·s.

The viscosity of the specific liquid A is a value measured by a tuning fork vibration type viscometer under a temperature condition of 20°C.

As the tuning fork vibration type viscometer, for example, SV-10 (manufactured by A&D Company, Limited) can be used.

From the viewpoint of food hygiene, liquid physical properties, and the like, a temperature of the specific liquid A is preferably from 5°C to 20°C.

From the viewpoint of food hygiene, liquid physical properties, and the like, a temperature of the specific liquid B is preferably from 5°C to 20°C.

(Shaping Step)

The method of producing a fat lump composition according to an embodiment of the disclosure includes a step of shaping the fat lump composition precursor obtained in the fat lump composition precursor preparation step.

A time from the contact between the specific liquid A and the specific liquid B to the start of the shaping of the fat lump composition precursor is preferably within 1 minute, and more preferably from 0.01 seconds to 10 seconds. As a result, it possible to perform shaping before the crosslinking of the edible ionically crosslinkable polymer completely proceeds, and it possible to bring the appearance of the meat alternative using the fat lump composition to be produced closer to the appearance of the chunk of meat.

The shaping method of the fat lump composition precursor is not particularly limited, and from the viewpoint of productivity, the shaping of the fat lump composition precursor is preferably performed by pressurizing the fat lump composition precursor by a shaping member and a support member.

The shapes of the shaping member and the support member are not particularly limited, and may be a roller shape or a plate shape. Note that the plate-shaped shaping member and support member include a member including a moving mechanism such as a belt conveyor.

Materials of the shaping member and the support member are not particularly limited, and examples thereof include stainless steel, silicone rubber, and vinylidene fluoride rubber (FKM) from the viewpoint of food hygiene.

From the viewpoint of productivity, the shaping member is preferably a shaping roller arranged so as to face the support member. The fat lump composition precursor is shaped when passing between the shaping roller and the support member.

The shaping roller can have a shaping part having a projection. As a result, the fat lump composition precursor is shaped, and the cross section of the specific fat lump composition to be produced has an elongated shape. Therefore, a meat alternative obtained by using the specific fat lump composition has an appearance similar to that of chunk of meat.

The number of projections included in the shaping part may be one or two or more, and from the viewpoint of bringing the appearance of the meat alternative closer to the appearance of the chunk of meat, the number of projections is preferably two or more, and more preferably from 3 to 200 per shaping part.

The shaping roller may have one shaping part or two or more shaping parts.

Specific examples of the shaping roller having two or more shaping parts include a shaping roller alternately including a dicing part and a shaping part to be described below.

In a case in which the shaping member is a shaping roller having a shaping part having a projection, a minimum distance between the projection and the support member is preferably from 0.1 mm to 1.0 mm, and more preferably from 0.1 mm to 0.8 mm, from the viewpoint of brining the appearance of the meat alternative closer to the appearance of the chunk of meat.

The shape of the projection is not particularly limited, and may extend in one direction (for example, in a direction perpendicular to a tangent of an outer periphery of the shaping roller), for example. Specifically, the projection may have a triangular prism shape, a semi-cylindrical shape, a columnar shape having a trapezoidal cross section, or the like.

In a case in which the shaping part has two or more projections extending in one direction, from the viewpoint of brining the appearance of the meat alternative closer to the appearance of the chunk of meat, an interval between adjacent projections is preferably 10.0 mm or less, more preferably 8.0 mm or less, and still more preferably 5.0 mm or less. From the viewpoint of improving the strength of the fat lump composition, the interval between adjacent projections is preferably 0.5 mm or more, more preferably 1.0 mm or more, and still more preferably 3.0 mm or more. From the viewpoint of brining the appearance of the meat alternative closer to the appearance of the chunk of meat and from the viewpoint of improving the strength of the fat lump composition, the interval between adjacent projections is preferably from 0.5 mm to 10.0 mm.

Note that, in the disclosure, the interval between adjacent projections means a distance between positions of the protrusions at which a distance to the support member is minimized. **In** other words, the interval between adjacent projections means a distance between vertexes of the projections. Note that in a case in which the vertex of the projection has a flat surface, the distance at which the distance between the vertexes is minimum is set as the interval between adjacent projections.

The shaping roller can include a dicing part.

The shaping roller includes a dicing part, such that the fat lump composition precursor or the fat lump composition after shaping can be cut (diced) into a desired size.

From the viewpoint of ease of cutting, a minimum distance between the dicing part and the support member is preferably 0.5 mm or less, more preferably 0.3 mm or less, and still more preferably 0.1 mm or less, and may be 0 mm.

The shape of the dicing part is not particularly limited, and can be a shape extending in a tangential direction of the outer periphery of the shaping roller and in a direction perpendicular to the tangential direction. Specifically, the dicing part can have a cubic shape, a semi-cylindrical shape, or the like.

**In** a case in which the dicing part has a cubic shape, from the viewpoint of ease of cutting, a length of the dicing part in the tangential direction of the outer periphery of the shaping roller is preferably 1.0 mm or more, more preferably 5.0 mm or more, and still more preferably 10.0 mm or more. From the viewpoint of bring the appearance of the meat alternative closer to the appearance of the chunk of meat, the length of the dicing part in the tangential direction of the outer periphery of the shaping roller is preferably 200.0 mm or less. From the viewpoint of ease of cutting and from the viewpoint of bring the appearance of the meat alternative closer to the appearance of the chunk of meat, the length of the dicing part in the tangential direction of the outer periphery of the shaping roller is preferably from 1.0 mm to 200.0 mm.

The shaping roller may include two or more dicing parts. **In** a case in which the shaping roller includes two or more dicing parts, the interval between adjacent dicing parts is preferably appropriately adjusted, and for example, is preferably from 10.0 mm to 100.0 mm, and more preferably from 13.0 mm to 70.0 mm.

Note that, in the disclosure, the interval between adjacent dicing parts means a distance between positions of the dicing parts at which a distance to the support member is minimized. **In** other words, the interval between adjacent dicing parts means a distance between vertexes of the dicing parts. Note that in a case in which the vertex of the dicing part has a flat surface, the distance at which the distance between the vertexes is minimum is set as the interval between adjacent dicing parts.

In a case in which the shaping of the fat lump composition precursor is performed by pressurizing the fat lump composition precursor by the shaping roller and the support member, the contact between the liquid (specific liquid A) containing an edible ionically crosslinkable polymer and a granular material containing an oil and/or fat and the liquid (specific liquid B) containing a cation can be performed by supplying the specific liquid A to a surface of the shaping roller or the support member on which the specific liquid B is present, and then supplying the specific liquid B.

**In** the case in the contact between the specific liquid A and the specific liquid B is performed by the method described above, from the viewpoint of bring the appearance of the meat alternative closer to the appearance of the chunk of meat, a ratio (rotation speed (mm/sec) or movement speed (mm/sec) of shaping roller or support member/supply speed of specific liquid A) of a rotation speed (mm/sec) or a movement speed (mm/sec) of the shaping roller or the support member to a supply speed (mm/sec) of the specific liquid A to the shaping roller or the support member is preferably 1.00 or more, more preferably 1.50 or more, and still more preferably 2.00 or more. From the viewpoint of bring the appearance of the meat alternative closer to the appearance of the chunk of meat, the ratio of the speeds is preferably 20.00 or less. From the viewpoint of bring the appearance of the meat alternative closer to the appearance of the chunk of meat, the ratio of the speeds is preferably from 1.00 to 20.00.

Note that the supply speed of the specific liquid A is calculated by dividing a discharge flow rate of the specific liquid A by a tip cross-sectional area of a nozzle that discharges the specific liquid A.

The rotation speed of the shaping roller or the support member refers to a speed of a roll surface, and is calculated by measuring a rotation speed using a non-contact type rotation system (for example, hand tachometer, manufactured by Line Seiki Co., Ltd.) and using the numerical value and the roll diameter.

The movement speed of the shaping roller or the support member is measured by an incremental measurement wheel encoder (for example, DFV60, manufactured by SICK AG).

From the viewpoint of productivity and from the viewpoint of bring the appearance of the meat alternative closer to the appearance of the chunk of meat, the supply speed of the specific liquid A is preferably from 40.0 mm/sec to 120.0 mm/sec, and more preferably from 60.0 mm/sec to 100.0 mm/sec.

From the viewpoint of productivity and from the viewpoint of bring the appearance of the meat alternative closer to the appearance of the chunk of meat, the rotation speed of the shaping roller is preferably from 50.0 mm/sec to 400.0 mm/sec, more preferably from 80.0 mm/sec to 360.0 mm/sec, and still more preferably from 150.0 mm/sec to 200.0 mm/sec.

In a case in which the shaping of the fat lump composition precursor is performed by pressurizing the fat lump composition precursor by the shaping roller and the support member, the contact between the specific liquid A and the specific liquid B can be performed by immersing the shaping roller and the support member in a tank filled with the specific liquid B, and supplying the specific liquid A to the shaping roller or the support member.

The specific liquid A may be brought into contact with the specific liquid B by being supplied onto the specific liquid B present on the surface of the shaping roller or the support member.

The specific liquid A may be brought into contact with the specific liquid B by supplying the specific liquid A to one surface of the shaping roller or the support member on which the specific liquid B is not present, and bringing the specific liquid A into contact with the other surface of the shaping roller or the support member on which the specific liquid B is present before shaping.

Note that it is preferable that the shaping roller and the support member are immersed so that a part thereof is exposed from the specific liquid B, and as a result, a region for supplying the specific liquid A can be provided.

The fat lump composition obtained by shaping may be washed with tap water or the like. After washing, freezing may be performed using a refrigerator or the like.

The fat lump composition adhering to the shaping roller and the support member may be removed during a period of time from the production of the fat lump composition to a next production of a fat lump composition. A method of removing the fat lump composition is not particularly limited, and can be performed by washing using water, the specific liquid B, a gas, or the like. By removing the fat lump composition, the shaping of the fat lump composition precursor can be preferably performed, and the fat lump composition can be continuously produced.

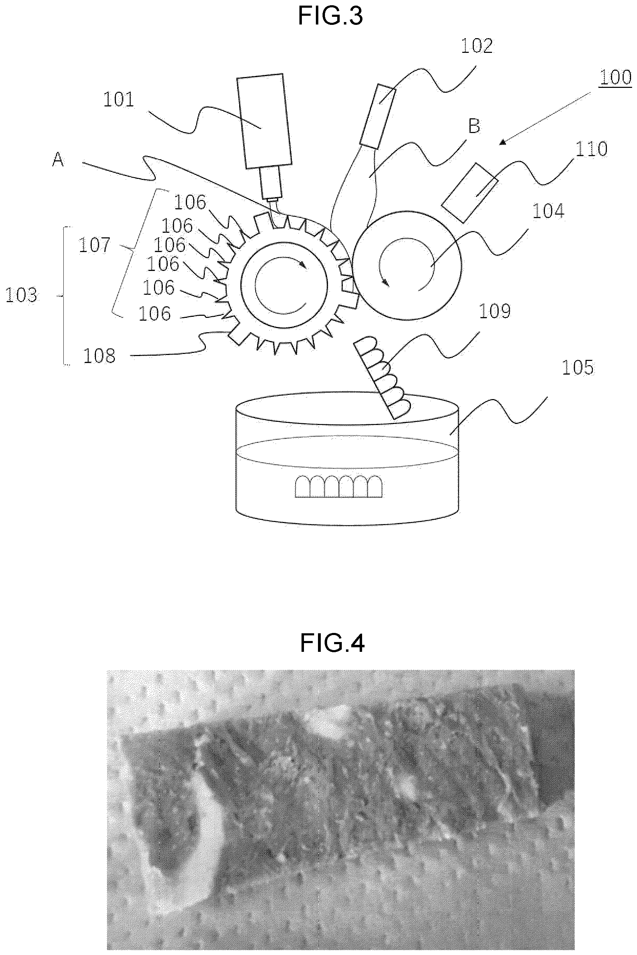

Next, an embodiment of the method of producing a fat lump composition of the disclosure will be described with reference to Fig. 3. Note that the method of producing a fat lump composition of the disclosure is not limited to the following method.

Fig. 3 is a schematic cross-sectional view illustrating an embodiment of a production apparatus of a fat lump composition (hereinafter, also simply referred to as "production apparatus").

A production apparatus 100 includes a supply unit 101 of a liquid (specific liquid A) containing an edible ionically crosslinkable polymer and a granular material containing an oil and/or fat (hereinafter, also simply referred to as "supply unit 101"), a supply unit 102 of a liquid (specific liquid B) containing a cation (hereinafter, also simply referred to as "supply unit 102"), a roller-shaped shaping member (shaping roller) 103, and a roller-shaped support member (support roller) 104.

The production apparatus 100 may include a bathtub 105.

As illustrated in Fig. 3, the shaping roller 103 includes three shaping parts 107 having six projections 106 and three dicing parts 108 alternately. Since the shaping roller includes the shaping part having projections, the fat lump composition precursor is shaped, and a cross section of a specific fat lump composition to be produced has an elongated shape. Therefore, a meat alternative obtained by using the specific fat lump composition has an appearance similar to that of chunk of meat.

Each of the projections 106 extends in a direction perpendicular to a tangent of an outer periphery of the shaping roller 103.

Each of the dicing parts 108 extends in a tangent direction of the outer periphery of the shaping roller 103 and a direction perpendicular to the tangent direction.

First, the specific liquid B is supplied from the supply unit 102 to the surface of the shaping roller 103.

Next, the specific liquid A (in Fig. 3, indicated by the reference sign A) is supplied from the supply unit 101 to the surface of the shaping roller 103 to which the specific liquid B is supplied.

Next, the specific liquid B (in Fig. 3, indicated by the reference sign B) is supplied from the supply unit 102 to the surface of the shaping roller 103 to which the specific liquid A is supplied.

On the surface of the shaping roller 103, the edible ionically crosslinkable polymer contained in the supplied specific liquid A is crosslinked with the cation contained in the specific liquid B, such that a fat lump composition precursor is produced.

Next, the fat lump composition precursor is pressurized and shaped by the shaping part 107 of the shaping roller 103 and the support roller 104, and then diced into pieces of a desired size by the dicing part 108 of the shaping roller 103, thereby obtaining a fat lump composition 109.

The obtained fat lump composition 109 is charged into the bathtub 105 and washed with water or the like.

In an embodiment, the production apparatus 100 may include a washing unit 110. The fat lump composition adhering to the shaping roller 103 or the support roller 104 can be removed by the washing unit 110. In Fig. 3, the washing unit 110 for removing the fat lump composition adhering to the support roller 104 is illustrated, but the disclosure is not limited thereto, and the production apparatus 100 may include a washing unit for removing the fat lump composition adhering to the shaping roller 103. The washing unit is not particularly limited as long as the washing unit can supply water, the specific liquid B, a gas, and the like, and examples thereof include a nozzle that can supply these materials.

The supply unit of the specific liquid A may include a nozzle. A cross-sectional shape of the nozzle is not particularly limited, and can be appropriately adjusted. From the viewpoint of brining the appearance of the meat alternative closer to the appearance of the chunk of meat, the cross-sectional shape of the nozzle is preferably an elliptical shape, a rectangular shape, a semicircular shape, or a rhombic shape. In a case in which the nozzle shape is a rectangular shape, an aspect ratio (length of long side/length of short side) is preferably from 3 to 50, and more preferably from 4 to 40.

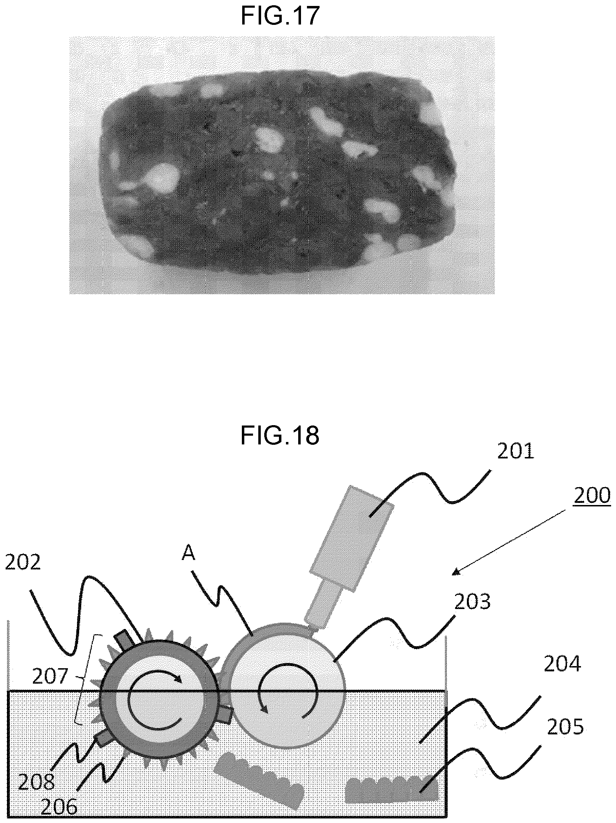

Next, another embodiment of the method of producing a fat lump composition of the disclosure will be described with reference to Fig. 18. Note that the method of producing a fat lump composition of the disclosure is not limited to the following method.

Fig. 18 is a schematic cross-sectional view illustrating another embodiment of a production apparatus of a fat lump composition (hereinafter, also simply referred to as "production apparatus").

A production apparatus 200 includes a supply unit 201 of a liquid (specific liquid A) containing an edible ionically crosslinkable polymer and a granular material containing an oil and/or fat (hereinafter, also simply referred to as "supply unit 201"), a roller-shaped shaping member (shaping roller) 202, a roller-shaped support member (support roller) 203, and a tank 204 filled with a liquid (specific liquid B) containing a cation.

As illustrated in Fig. 18, the shaping roller 202 includes three shaping parts 207 having a plurality of projections 206 and three dicing parts 208 alternately.

Since the shaping roller includes the shaping part having projections, the fat lump composition precursor is shaped, and a cross section of a specific fat lump composition to be produced has an elongated shape. Therefore, a meat alternative obtained by using the specific fat lump composition has an appearance similar to that of chunk of meat.

Each of the projections 206 extends in a direction perpendicular to a tangent of an outer periphery of the shaping roller 202.

Each of the dicing parts 208 extends in a tangent direction of the outer periphery of the shaping roller 202 and a direction perpendicular to the tangent direction.

First, the specific liquid B (not illustrated) is supplied to the surfaces of the rollers by the rotation of the shaping roller 202 and the support roller 203 in the tank 204 filler with the specific liquid B.

Next, the specific liquid A (in Fig. 18, indicated by the reference sign A) is supplied from the supply unit 201 to the surface of the support roller 203.

With the supply of the specific liquid A, the specific liquid A and the specific liquid B come into contact with each other on the surface of the support roller 203. By rotating the support roller 203 and the shaping roller 202, the specific liquid A present on the surface of the support roller 203 and the specific liquid B present on the surface of the shaping roller 202 come into contact with each other. A fat lump composition precursor is produced by the contact between the specific liquid A and the specific liquid B.

Next, the fat lump composition precursor is pressurized and shaped by the shaping part 207 of the shaping roller 202 and the support roller 203, and then diced into pieces of a desired size by the dicing part 208 of the shaping roller 202, thereby obtaining a fat lump composition 205.

<Fat Lump Composition>

The fat lump composition according to an embodiment of the disclosure is a fat lump composition produced by the method for producing a fat lump composition.

<Fat Lump Mixture>

A fat lump mixture according to an embodiment of the disclosure contains the fat lump composition produced by the method of producing a fat lump composition, and a content of the fat lump composition produced by the method of producing a fat lump composition is 30% by mass or more with respect to a total mass of the fat lump mixture.

From the viewpoint of brining the appearance of the meat alternative closer to the appearance of the chunk of meat, the content of the fat lump composition produced by the method of producing a fat lump composition is preferably 50% by mass or more, and more preferably from 90% by mass to 99% by mass, with respect to a total mass of the fat lump mixture.

The fat lump mixture may contain two or more kinds of fat lump compositions produced by the method of producing a fat lump composition.

The fat lump mixture of the disclosure may contain a mass fat composition other than the fat lump composition produced by the method of producing a fat lump composition.

From the viewpoint of brining the appearance of the meat alternative closer to the appearance of the chunk of meat, a content of the fat lump composition other than the fat lump composition produced by the method of producing a fat lump composition is preferably 70% by mass or less, more preferably from 50% by mass or less, and still more preferably from 0.1% by mass to 10% by mass, with respect to a total mass of the fat lump mixture.

The fat lump mixture may contain additives such as a seasoning, an acidulant, a bittering agent, a spice, a sweetener, an antioxidant, a colorant, a color coupler, a flavor, a stabilizer, and a preservative.

<Meat Alternative>

A meat alternative according to an embodiment of the disclosure contains a lean-like portion containing a protein, and the fat lump composition produced by the method of producing a fat lump composition or a fat lump mixture containing a fat lump composition other than the fat lump composition produced by the method of producing a fat lump composition.
Since the lean-like portion has been described above, the description thereof is omitted.

<Method of Producing Meat alternative>

A method of producing a meat alternative according to an embodiment of the disclosure includes:

a first step of mixing a lean-like portion precursor and a specific fat lump composition or a fat lump mixture containing a specific fat lump composition to obtain a first mixture; and
a second step of stretching the first mixture.

Hereinafter, an embodiment of the method of producing a meat alternative according to an embodiment of the disclosure will be described, but the disclosure is not limited thereto.

(First Step)

A method of mixing the lean-like portion precursor and the specific fat lump composition or the fat lump mixture containing a specific fat lump composition is not particularly limited, and examples thereof include a method of mixing by hand and a method using a known mixing machine.
Examples of the mixing machine include a mixer, and attachment of the mixing machine preferably has a structure that scrapes up deposits on a wall surface.
The lean-like portion precursor can be obtained by mixing a fiber bundle-shaped textured protein and a binder.
The amount of the binder added is preferably from 1% by mass to 30% by mass, more preferably from 3% by mass to 25% by mass, and still more preferably from 5% by mass to 20% by mass, with respect to the mass of the fiber bundle-shaped textured protein swollen by moisture.
It is preferable to adjust fiber bundle-shaped textured protein to an appropriate size before mixing the fiber bundle-shaped textured protein with the binder.
Examples of a method of adjusting a size of the fiber bundle-shaped textured protein include a method of tearing the fiber bundle-shaped textured protein, a method of cutting the fiber bundle-shaped textured protein with a knife, and a method using both methods.
The size of the fiber bundle-shaped textured protein may be adjusted by crushing the protein in the vicinity of the discharge port of the extruder in the above-described (Preparation Step), or may be adjusted by crushing the protein using a meat mallet or the like after collection from the extruder.
It is preferable that the fiber bundle-shaped textured protein has a horizontal width of from 2 mm to 35 mm and a vertical width of from 35 mm to 500 mm before being mixed with the vegetable protein binder.
A thickness of the fiber bundle-shaped textured protein is not particularly limited, and is preferably appropriately adjusted according to a thickness of the fiber bundle-shaped textured protein produced by an extruder or the like. The horizontal width of the fiber bundle-shaped textured protein is preferably, for example, from 0.1 times to 2 times the horizontal width of a chunk meat-like meat alternative to be produced.
**In** a case in which a meat alternative to be produced contains other additives, it is preferable to mix the other additives together with the lean-like portion precursor and the like in the first step.
As the fiber bundle-shaped textured protein, the produced fiber bundle-shaped textured protein may be used, or a commercially available product may be used.
In a case in which the fiber bundle-shaped textured protein is produced, it is preferable to produce a fiber bundle-shaped textured protein by extruding a raw material containing a vegetable protein from an extruder.
Note that extrusion conditions are preferably as follows.
In a case in which the textured protein is produced, it is preferable to produce a textured protein by extruding a raw material containing a vegetable protein from an extruder.
Note that extrusion conditions are preferably as follows.

· Raw Material Containing Vegetable Protein

As the raw material containing a vegetable protein, at least a vegetable protein is contained, and it is preferable to contain water from the viewpoint of improving extraction efficiency.

A content of the water is preferably from 2 parts by mass to 30 parts by mass with respect to 10 parts by mass of the protein.

· Extrusion Conditions

The extruder is not particularly limited, and a known single screw extruder, non-intermeshing counter-rotating twin screw extruder, intermeshing counter-rotating twin screw extruder, and intermeshing co-counter rotating twin screw extruder can be used.

As for a barrel temperature of the extruder, a temperature of a barrel front half portion (a portion from a raw material supply unit to the center of the barrel) is preferably from 60°C to 100°C, a temperature of the center of the barrel (an axial length center of the barrel) is preferably from 90°C to 170°C, and a temperature of a barrel rear half portion (a portion from the center of the barrel to the tip of the barrel) is preferably from 140°C to 180°C.

It is preferable that the extruder has a die attached to the tip of the barrel.

The die is preferably a die from which a sheet-like extrudate is obtained.

A gap (lip clearance) of a discharge port of the die is preferably from 1 mm to 10 mm.

A length of the die is preferably 30 mm or more.

The die may be a cooling die. The cooling die refers to, for example, a die cooled by circulation of a cooling liquid (water, glycol, or the like).

Swelling of the extruded raw material is easily suppressed by using the cooling die. Therefore, the textured protein extruded using the cooling die tends to be fibrous.

In a case in which the cooling die is used, a temperature of the discharge port of the cooling die is preferably from 90°C to 120°C.

In a case in which a commercially available textured protein is used, as the fiber bundle-shaped textured protein, What the cluck manufactured by The Vegetarian Butcher Japan Inc., APEX 1000 manufactured by FUJI OIL CO., LTD., and the like can be used.

(Second Step)

The second step is a step of stretching the first mixture.

In a case in which the first mixture contains a fiber bundle-shaped textured protein, it is preferable to obtain a post-stretching mixture in which a fiber axis direction of the fiber bundle-shaped textured protein is oriented in one direction by stretching the first mixture obtained in the first step.

The fiber axis direction of the fiber bundle-shaped textured protein means an orientation of a longitudinal direction of fibers forming the muscle-like texture.

The case in which "the fiber axis direction of the fiber bundle-shaped textured protein is oriented in one direction" includes a case in which the fiber axis directions of the fiber bundle-shaped textured proteins are completely the same and a case in which the fiber axis directions of the fiber bundle-shaped textured proteins are different but are oriented in a certain direction.

The second step is preferably a step of stretching the first mixture to obtain a post-stretching mixture in which a degree of orientation (hereinafter, also simply referred to as "specific degree of orientation) of the fiber direction of the fiber bundle-shaped textured protein in a cross section along a stretching direction is 1.1 or more.

From the viewpoint of the degree of orientation, the method of stretching the first mixture is preferably any one of:

(i) a method of stretching the first mixture in a direction perpendicular to a plane including a rotation axis of a set of rollers by passing the mixture through a region surrounded by the set of rollers in the direction perpendicular to the plane including the rotation axis of the set of rollers and pressing the mixture by the rollers;
(ii) a method of stretching the first mixture in a direction parallel to a rotation axis of a set of rollers by sandwiching the mixture between the set of rollers having parallel rotation axes and rotating in the same direction and pressing the first mixture by reducing a distance between the rollers while rotating the mixture;
(iii) a method of stretching the first mixture by gripping and pulling a surface of the first mixture; and
(iv) a method of stretching the first mixture by pressing the first mixture with a plate.

A stretch ratio of the first mixture is preferably 2 times or more, more preferably 4 times or more, and still more preferably 6 times or more.

The stretch ratio is a value obtained by dividing the length of the post-stretching mixture in the stretching direction by the length of the first mixture in the stretching direction.

Note that the stretching direction refers to a direction in which the first mixture is stretched in the second step.

(Third Step)

The method of producing a meat alternative according to an embodiment of the disclosure preferably further includes, after the second step, a third step of molding the post-stretching mixture to obtain a molded product, and then heating and curing the molded product.

In a case in which the binder contains a thermally irreversible gel-forming polysaccharide, formation of a gel containing a thermally irreversible gel-forming polysaccharide is promoted by heating the molded product. As a result, the molded product is cured, and the shape of the chunk meat-like meat alternative is more easily maintained.

The shape of the molded product is preferably a shape similar to, for example, steak meat or meat for stewing.

A method of molding the post-stretching mixture is not particularly limited, examples thereof include a method of cutting the post-stretching mixture and a method of deforming the post-stretching mixture by applying an external force, and from the viewpoint of the texture, a method of cutting the post-stretching mixture is preferable.

In a case in which the post-stretching mixture is cut, it is preferable to cut the post-stretching mixture in a direction orthogonal to the fiber axis direction of the textured protein contained in the post-stretching mixture.

In a case in which the post-stretching mixture is cut, it is preferable to cut the post-stretching mixture using a knife such as a cutter or a kitchen knife.

When the molded product is obtained by molding the post-stretching mixture, the third step preferably includes a step of cutting the post-stretching mixture perpendicularly to an orientation direction of fibers, and a step of bundling a plurality of post-stretching mixtures before cutting or after cutting.

A plurality of cut post-stretching mixtures may be bundled and molded with aligned fiber directions, or a plurality of post-stretching mixtures or cut post-stretching mixtures may be bundled with aligned fiber directions, and then the bundled post-stretching mixtures or cut post-stretching mixtures may be cut and molded perpendicularly to the fiber direction.

A meat alternative having an appearance similar to that of steak of livestock meat is easily obtained by molding the post-stretching mixture so that the fiber direction is in a thickness direction of the steak.

The third step may include a step of molding the post-stretching mixture to obtain a molded product, and then forming a pattern (a marbled pattern) similar to fat on a surface of the molded product for the purpose of brining an appearance of a chunk meat-like meat alternative closer to an appearance of livestock meat (hereinafter, also referred to as "fat-like portion forming step").

The fat-like portion forming step is preferably, for example, a step of forming a groove having a depth of 100 $\mu$m or more in the surface of the molded product and forming a fat-like portion by attaching an oil and/or fat to the formed groove.

Examples of a method of forming a groove in the surface of the molded product include a method of digging a surface with a knife and a method of forming a groove with a mold, and the method of forming a groove with a mold is preferable.

Subsequently, an oil and/or fat is attached to the groove formed in the surface of the molded product, and the groove is filled to form a pattern similar to that of fat.

When the oil and/or fat is attached to the groove formed in the surface of the molded product, the oil and/or fat may be in a liquid state, a semi-solid state in which a liquid and a solid are mixed, or a solid state, and the liquid state or the semi-solid state is preferable.

When the oil and/or fat is attached to the groove formed in the surface of the molded product, the oil and/or fat may be attached in an emulsion state.

In the case in which the oil and/or fat is attached in the form of an emulsion, it is preferable that an emulsion containing a gelling agent, an oil and/or fat, and water (referred to as "gelling emulsifier") is attached to the groove formed in the surface of the molded product, and then the gelling emulsion attached to the groove is gelled.

The gelling emulsion is preferably an oil-in-water emulsion.

An oil drop diameter of the oil and/or fat in the gelling emulsion is preferably from 20 $\mu$m to 500 $\mu$m, more preferably from 30 $\mu$m to 400 $\mu$m, and still more preferably from 50 $\mu$m to 300 $\mu$m.

Examples of a method of gelling the gelling emulsion attached to the groove include a method of gelling the molded product in which the gelling emulsion is attached to the groove by charging the molded product into an aqueous solution containing a gelling accelerator.

A method of heating the molded product is not particularly limited, and examples thereof include wet heating (a heating method using water as a heat resource), dry heating (a heating method using a material other than water such as metal or gas as a heat resource), and dielectric heating.

In the case of producing a raw meat-like appearance, from the viewpoint of heat resistance of a colorant, it is preferable that the molded product is uniformly and quickly heated by a wet heating method after vacuum pouch of the molded product.

Examples of the wet heating include a steaming method and a method of boiling water, and the wet heating is preferably a method of boiling water because the molded product can be uniformly and quickly treated.

As for a heating temperature of the molded product, for example, the temperature inside the molded product is preferably from 70°C to 100°C.

The temperature inside the molded product is a value measured by a thermometer.

As the thermometer, for example, a data logger (TR-W550) manufactured by KEYENCE CORPORATION can be used. The internal temperature of the molded product can be measured by inserting a thermocouple into the chunk meat-like meat alternative during the vacuum pouch.

[Examples]

Hereinafter, Examples will be described, but the invention is not limited to these Examples. Note that, in the following description, unless otherwise specified, "part" and "%" are all on a mass basis.

<Example 1>

(1) Droplet Forming Step

An aqueous phase and an oil phase were prepared as follows.

Aqueous phase: 99.5 parts by mass of tap water and 0.5 parts by mass of RYOTO SUGAR ESTER M-1695 (manufactured by Mitsubishi Chemical Corporation) as a surfactant were weighed to a total of 5 kg, and the weighed materials were stirred using THREE-ONE MOTOR (manufactured by Shinto Scientific Co., Ltd.) for 30 minutes to be completely dissolved.

Oil phase: 1 kg of coconut oil (manufactured by ALCAPIA Corp., product name: PIACOCONA, melting point of 24°C) as an oil and/or fat was weighed.

Membrane emulsification was performed using a pipe-shaped SPG membrane (manufactured by SPG Technology Co., Ltd., pore diameter of 50 $\mu$m) with an aqueous phase as a continuous phase and an oil phase as a dispersed phase. Specifically, the pipe-shaped SPG membrane was inserted and disposed in a tubular container, and from one end to the other end of the container, the aqueous phase was allowed to flow at a flow rate of 50 mL/min inside the pipe-shaped SPG membrane (inner conduit), and the oil phase was allowed to flow at a flow rate of 10 mL/min outside the pipe-shaped SPG membrane (outer conduit (flow path between the container and the SPG membrane)).

As a result, a liquid containing droplets containing an oil and/or fat (hereinafter, also referred to as "droplet dispersion") was obtained. Note that a particle diameter of the droplet (granular material) containing an oil and/or fat was 215 $\mu$m.

(2) Oil and/or fat Solidifying Step

The droplet dispersion was added to a separatory funnel and then allowed to stand for 30 minutes. Since the droplet dispersion was separated into a phase containing a droplet containing an oil and/or fat and an aqueous phase, the aqueous phase was discharged from the separatory funnel, and the phase containing the droplet containing an oil and/or fat was collected.

The collected phase containing the droplet containing an oil and/or fat was allowed to stand and cooled in a refrigerator having an internal temperature of 5°C for 1 hour, and solidification of the oil and/or fat was performed, thereby obtaining a liquid containing particles (hereinafter, also referred to as "particle-containing liquid").

(3) Production of Fat Lump Composition

1 part by mass of sodium alginate (KIMICA ALGIN I-1, manufactured by KIMICA Corporation) as an edible ionically crosslinkable polymer, 0.5 parts by mass of RYOTO SUGAR ESTER M-1695 (manufactured by Mitsubishi Chemical Corporation) as a surfactant, and 98.5 parts by mass of tap water were mixed to obtain a liquid containing an edible ionically crosslinkable polymer (hereinafter, also referred to as "ionically crosslinkable polymer solution").

100 parts by mass of the particle-containing liquid was added to 100 parts by mass of the ionically crosslinkable polymer solution, and the mixture was slowly stirred with a stirrer (THREE ONE MOTOR, manufactured by Yamato Scientific Co., Ltd.), thereby obtaining a liquid containing an edible ionically crosslinkable polymer and a granular material containing an oil and/or fat (specific liquid A, viscosity of 96 mPa·s, and temperature of 15°C). The specific liquid A was poured into a stainless steel vat so that a thickness of the solution was 2 mm.

1 part by mass of calcium chloride (food additive grade, manufactured by FUJIFILM Wako Pure Chemical Corporation) as a salt containing a cation was dissolved in 99 parts by mass of tap water to prepare a liquid containing a cation (specific liquid B, viscosity of 1.1 mPa·s, and temperature of 15°C).

The specific liquid B having the same mass as the specific liquid A contained in the stainless vat was poured into the stainless vat, and the mixed liquid was allowed to stand in a refrigerator having an internal temperature of 5°C for 2 hours to crosslink (gel) the edible ionically crosslinkable polymer, thereby obtaining a fat lump composition.

The fat lump composition was washed with tap water, moisture on a surface was wiped off with KIM TOWEL (registered trademark, manufactured by NIPPON PAPER CRECIA CO., LTD.).

The fat lump composition was washed with tap water and then frozen in a refrigerator at -20°C for half a day, and the fat lump composition was cut into the following size.

In a cross section of the fat lump composition perpendicular to a longitudinal direction, when a length of a line having a maximum length between two points was defined as a, and a length of a line having a maximum length among lines perpendicular to the line having the maximum length between the two points was defined as b, the length a was 2.1 mm, the length b was 5.2 mm, and the length c of the fat lump composition in the longitudinal direction was 37 mm. Therefore, b/a was 2.48, and c/b was 7.12.

When a length of a line having a minimum length among lines which were perpendicular to the line having the maximum length between the two points and had a ratio of a length to the line having the maximum length between the two points of 0.10 or more was defined as d, the length d was 1.5 mm, and d/a was 0.71.

When the length b of the line having the maximum length between the two points on the cross section perpendicular to the longitudinal direction was measured at 10 arbitrary points of the fat lump composition in the longitudinal direction, a maximum value b1 and a minimum value b2 thereof were determined, and b2/b1 was calculated, the result was 0.63.

In the following Examples and Comparative Examples, the lengths a, b, c, and d, b/a, c/b, d/a, and b2/b1 were also measured or calculated, and summarized in Table 1.

<Example 2>

A fat lump composition was produced in the same manner as that of Example 1, except that the size of cutting the fat lump composition was changed.

<Example 3>

A fat lump composition was produced in the same manner as that of Example 1, except that (3) Production of Fat lump Composition was performed as follows.

The specific liquid A was filled in a plastic syringe (SS-50LZ, manufactured by Terumo Corporation) having an internal volume of 50 mL, and the plastic syringe was set in a syringe pump (PHD2000, manufactured by Harvard Apparatus).

A polytetrafluoroethylene (PTFE) tube (NAFLON(R) PTFE tube, manufactured by NICHIAS Corporation) having an inner diameter of 2 mm and an outer diameter of 3 mm was connected to the tip of the syringe pump, and a nozzle having a size of 2 mm × 10 mm (rectangular shape) was connected to the tip to prepare a supply unit (in Fig. 3, indicated by reference numeral 101) of a liquid (specific liquid A) containing a liquid containing an edible ionically crosslinkable polymer and a granular material containing an oil and/or fat.

A production apparatus 100 of a fat lump composition including a supply unit 101 of a liquid (specific liquid A) containing an edible ionically crosslinkable polymer and a granular material containing an oil and/or fat, a supply unit 102 of a liquid (specific liquid B) containing a cation, a shaping roller 103, and a support roller 104 illustrated in Fig. 3 was prepared.

As illustrated in Fig. 3, the shaping roller 103 includes three shaping parts 107 having six projections 106 and three dicing parts 108 alternately.

Each of the projections 106 extended in a direction perpendicular to a tangent of an outer periphery of the shaping roller 103 (triangular prism shape).

Each of the dicing parts 108 extended in a tangent direction of the outer periphery of the shaping roller 103 and a direction perpendicular to the tangent direction (cubic shape).

An interval of adjacent projections 106 in the shaping part 107 was set to 5.0 mm. A length of the dicing part 108 in the tangent direction of the outer periphery of the shaping roller 103 was set to 10.0 mm, and an interval between adjacent dicing parts 108 was set to 40.0 mm.

A minimum distance between the projection 106 and the support roller 104 was set to 0.5 mm, and a minimum distance between the dicing part 108 and the support roller 104 was set to 0.1 mm.

First, the specific liquid B was supplied to the surface of the shaping roller 103 from the supply unit 102 at a flow rate of 1 L/min.

Next, the specific liquid A was supplied from the supply unit 101 to the surface of the shaping roller 103 to which the specific liquid B was supplied at a supply speed of 83.3 mm/sec (at the time of passing through the nozzle cross section). A rotation speed (roll surface) of the shaping roller 103 was 178.0 mm/sec.

A ratio (rotation speed of shaping roller/supply speed of specific liquid A) of the rotation speed of the shaping roller to the supply speed of the specific liquid A to the shaping roller 103 was 2.14 (in Table 1, simply described as a speed ratio).

Next, the specific liquid B was supplied from the supply unit 102 to the surface of the shaping roller 103 to which the specific liquid A was supplied at a flow rate of 1 L/min.

0.275 seconds after the supplied specific liquid B was brought into contact with the specific liquid A, the obtained fat lump composition precursor was pressurized (shaped) by the shaping part 107 of the shaping roller 103 and the support roller 104, and then, the shaped fat lump composition precursor (fat lump composition) was diced by the dicing part 108.

The fat lump composition was washed with tap water in the bathtub 105 and then frozen in a refrigerator at -20°C for half a day, thereby obtaining a fat lump composition.

<Examples 4 to 12>

Fat lump compositions were produced in the same manner as that of Example 3, except that the supply speed of the specific liquid A, the rotation speed of the shaping roller, the minimum distance between the projection and the support roller, the interval between adjacent projections, and the minimum distance between the dicing part and the support roller were changed as shown in Table 1.

Note that, in Example 9, since the minimum distance between the dicing part and the support roller was large and the obtained fat lump composition was not diced, the fat lump composition was cut. In Table 1, the length after cutting is shown.

Note that the time from the contact between the specific liquid B and the specific liquid A to the start of the shaping of the fat lump composition precursor was 0.275 seconds in Examples 4 to 9, 0.138 seconds in Example 10, 0.550 seconds in Example 11, and 0.826 seconds in Example 12.

<Comparative Example 1>

A fat lump composition and a fat lump mixture were produced in the same manner as that of Example 1, except that (3) Production of Fat lump Composition was performed as follows.

The specific liquid A was filled in a plastic syringe (SS-50LZ, manufactured by Terumo Corporation) having an internal volume of 50 mL, and the plastic syringe was set in a syringe pump (PHD2000, manufactured by Harvard Apparatus).

A PTFE tube (NAFLON(R) PTFE tube, manufactured by NICHIAS Corporation) having an inner diameter of 2 mm and an outer diameter of 3 mm was connected to the tip of a syringe pump, and a nozzle (formed of SUS304, manufactured by cutting) having an inner diameter of 2.4 mm was connected to the tip thereof.

1 part by mass of calcium chloride (food additive grade, manufactured by FUJIFILM Wako Pure Chemical Corporation) as a salt containing a cation was dissolved in 99 parts by mass of tap water to prepare a liquid (specific liquid B) containing a cation.

The specific liquid B was placed in a stainless steel vat, and the tip of the nozzle was immersed in the liquid.

The specific liquid A was supplied from the tip of the nozzle at a supply speed of 10 mL/min (at the time of passing through the nozzle cross section) using a syringe pump to obtain a fat lump composition.

The fat lump composition was washed with tap water and then frozen in a refrigerator at -20°C for half a day, and the fat lump composition was cut.

<Comparative Example 2>

A fat lump composition was produced in the same manner as that of Comparative Example 1, except that a nozzle having an inner diameter of 2.4 mm was changed to a size of 2 mm × 10 mm (rectangular shape).

<Comparative Example 3>

A fat lump composition was produced in the same manner as that of Example 1, except that (3) Production of Fat lump Composition was performed as follows.

The specific liquid A was filled in a plastic syringe (SS-50LZ, manufactured by Terumo Corporation) having an internal volume of 50 mL, and the plastic syringe was set in a syringe pump (PHD2000, manufactured by Harvard Apparatus).

A polytetrafluoroethylene (PTFE) tube (NAFLON(R) PTFE tube, manufactured by NICHIAS Corporation) having an inner diameter of 2 mm and an outer diameter of 3 mm was connected to the tip of the syringe pump, and a nozzle having a size of 2 mm × 10 mm (rectangular shape) was connected to the tip to prepare a supply unit (in Fig. 3, indicated by reference numeral 101) of a liquid (specific liquid A) containing a liquid containing an edible ionically crosslinkable polymer and a granular material containing an oil and/or fat.

1 part by mass of calcium chloride (food additive grade, manufactured by FUJIFILM Wako Pure Chemical Corporation) as a salt containing a cation was dissolved in 99 parts by mass of tap water to prepare a liquid (specific liquid B) containing a cation.

The same production apparatus as the production apparatus of a fat lump composition used in Example 3 was prepared, except that the supply part for the liquid (specific liquid B) containing a cation was not provided.

First, the specific liquid A was supplied from the supply unit 101 to the surface of the shaping roller 103 at a supply speed of 83.3 mm/sec (at the time of passing through the nozzle cross section). A rotation speed (roll surface) of the shaping roller 103 was 178.0 mm/sec.

A ratio (rotation speed of shaping roller/supply speed of specific liquid A) of the rotation speed of the shaping roller to the supply speed of the specific liquid A to the shaping roller 103 was 2.14 (in Table 1, simply described as a speed ratio).

The supplied specific liquid A was pressurized (shaped) by the shaping part 107 of the shaping roller 103 and the support roller 104.

The specific liquid after pressurization was placed in a stainless steel vat filled with the specific liquid B, and the mixed liquid was allowed to stand in a refrigerator having an internal temperature of 5°C for 2 hours to crosslink (gel) the edible ionically crosslinkable polymer, thereby obtaining a fat lump composition.

The fat lump composition was washed with tap water, moisture on a surface was wiped off with KIM TOWEL.

The fat lump composition was washed with tap water and then frozen in a refrigerator at -20°C for half a day, and the fat lump composition was cut.

<Example 13>

A fat lump mixture was produced by mixing the fat lump composition produced in Example 3 and the fat lump composition produced in Comparative Example 1 so that a content of the fat lump composition produced in Example 3 was 30% by mass and a content of the fat lump composition produced in Comparative Example 1 was 70% by mass.

<Example 14>

A fat lump mixture was produced by mixing the fat lump composition produced in Example 3 and the fat lump composition produced in Comparative Example 1 so that a content of the fat lump composition produced in Example 3 was 60% by mass and a content of the fat lump composition produced in Comparative Example 1 was 40% by mass.

<Example 15>

A fat lump mixture was produced by mixing the fat lump composition produced in Example 3 and the fat lump composition produced in Comparative Example 1 so that a content of the fat lump composition produced in Example 3 was 90% by mass and a content of the fat lump composition produced in Comparative Example 1 was 10% by mass.

<<Evaluation of Appearance of Meat alternative>>

(Preparation of Raw Material of Lean-Like portion)

Defatted soybean powder (SHOWA FRESH RF, manufactured by Showa Sangyo Co., Ltd.) as a protein and a wheat gluten (PRO-GLU 65, manufactured by THE TORIGOE CO., LTD.) as a protein were mixed at 7:3 (= defatted soybean powder: wheat gluten [mass ratio]) to obtain a mixed powder 1.

A cooling die (die width: 50 mm, lip clearance: 3 mm) having a length of 350 mm was attached to a discharge portion of a twin screw extruder set so that a screw length was 1,100 mm and a maximum temperature of a screw tip portion was 155°C, and an outlet temperature of the cooling die was stabilized at 105°C. The mixed powder 1 was introduced into an extruder at 250 g/min, and 50% by mass of water with respect to the mass of the mixed powder 1 was added to the extruder and discharged from the extruder, thereby obtaining a raw material 1 of a lean-like portion (fiberized) having a muscle-like texture in an extrusion direction.

(Preparation of Lean-Like portion)

The raw material 1 of a lean-like portion was boiled in 3 L (liter) of boiling water for 10 minutes, and water was drained.

The raw material 1 of a lean-like portion was cut to a length of 30 mm and torn along the fiber direction so as to have a width of about 5 mm. The cut raw material 1 of a lean-like portion was immersed in an aqueous solution containing SAN BEET CONC (beet juice concentrate, manufactured by San-Ei Gen F.F.I. Inc.) as a colorant (concentration; 3% by mass of the colorant with respect to the entire aqueous solution) to be colored red, the colored raw material was taken out, and water was drained. Salt, pepper, and HAIMI (a seasoning, manufactured by Ajinomoto Co., Inc.) were added as seasonings and kneaded to obtain a strip-shaped fibrous soybean protein 1.

Thereafter, 15 g of GENUTINE 310-C (carrageenan, manufactured by Sansho Co., Ltd.) and 15 g of ALGINIC ACID 429S (sodium alginate containing a curing agent, manufactured by KIMICA Corporation) as binders and 60 g of water were added to 300 g of the strip-shaped fibrous soybean protein 1, and the mixture was uniformly mixed, thereby obtaining a lean-like portion precursor A.

Thereafter, 30 g of the fat lump composition produced in Example 1 was added to the lean-like portion precursor A, and the mixture was uniformly mixed, thereby obtaining a steak meat alternative precursor A (first mixture).

Thereafter, the steak meat alternative precursor A was stretched to a length of 6 times or more using a hand-made noodle finishing machine (Handmade finisher, manufactured FUKUI KOUSAKUSHO Ltd.). The stretched steak meat alternative precursor A (mixture after molding) was put into a lamination bag (ZIPLOC, manufactured by Asahi Kasei Corporation), and was fixed by being allowed to stand at 75°C for 5 minutes. In a direction perpendicular to the stretching direction of the steak meat alternative precursor A, the steak meat alternative precursor A was cut to a thickness of 25 mm to obtain a steak meat alternative.

A steak meat alternative was obtained in the same manner as described above using the fat lump composition or the fat lump mixture produced in other Examples and Comparative Examples.

Note that a content of the fat lump composition or the fat lump mixture was 15% by mass with respect to the total mass of the steak meat alternative.

A front image (image A: an image showing the fat lump composition extending in the longitudinal direction) and a cross-sectional image (image B: an image showing a cross section perpendicular to the longitudinal direction of the fat lump composition) of each steak meat alternative were obtained, and whether or not the steak meat alternative had an appearance similar to that of marbled meat was evaluated by five panelists, and the number of people was counted. Evaluation was performed according to the following evaluation criteria, and the results were summarized in Table 2.

Note that the image A is an image captured from the direction perpendicular to the stretching direction of the steak meat alternative precursor. The image B is an image obtained by capturing a cut surface of the steak meat alternative precursor.

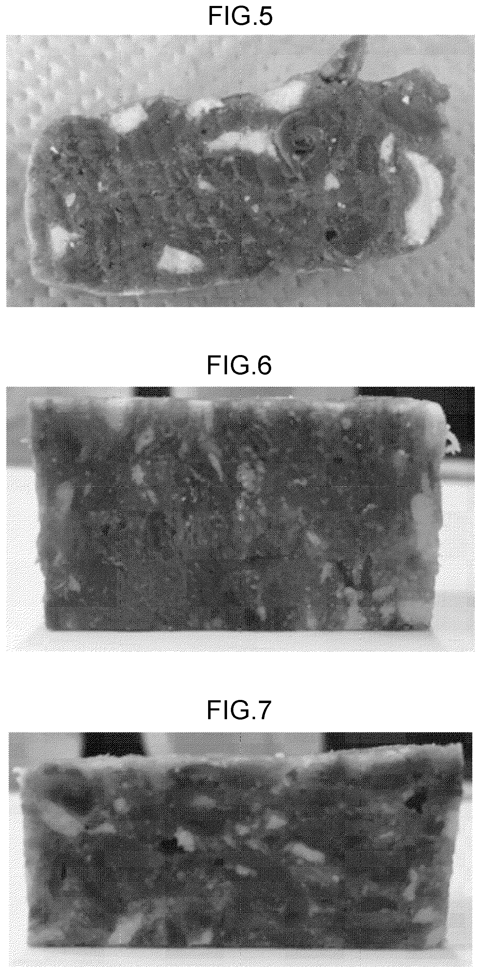

The image A and the image B of the steak meat alternative precursor produced using the fat lump composition of Example 1 are illustrated in Fig. 4 and Fig. 5, respectively.

The image A and the image B of the steak meat alternative precursor produced using the fat lump composition of Example 2 are illustrated in Fig. 6 and Fig. 7, respectively.

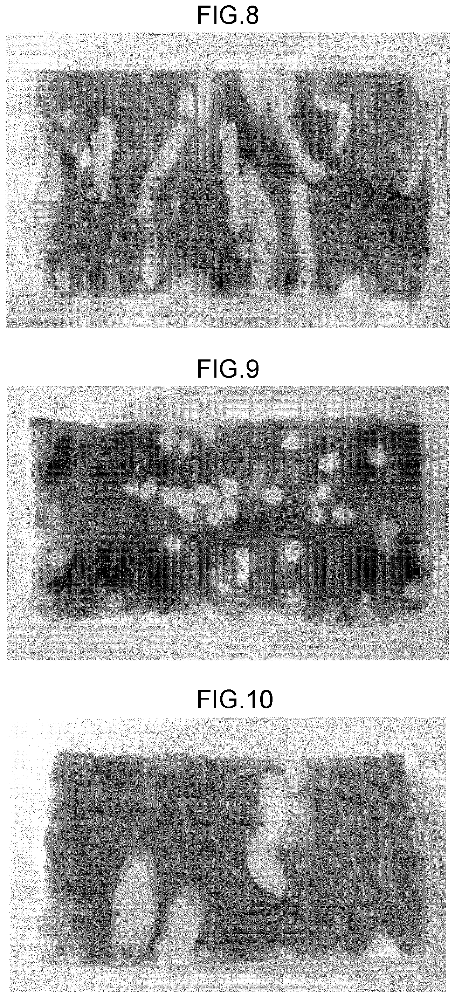

The image A and the image B of the steak meat alternative precursor produced using the fat lump composition of Comparative Example 1 are illustrated in Fig. 8 and Fig. 9, respectively.

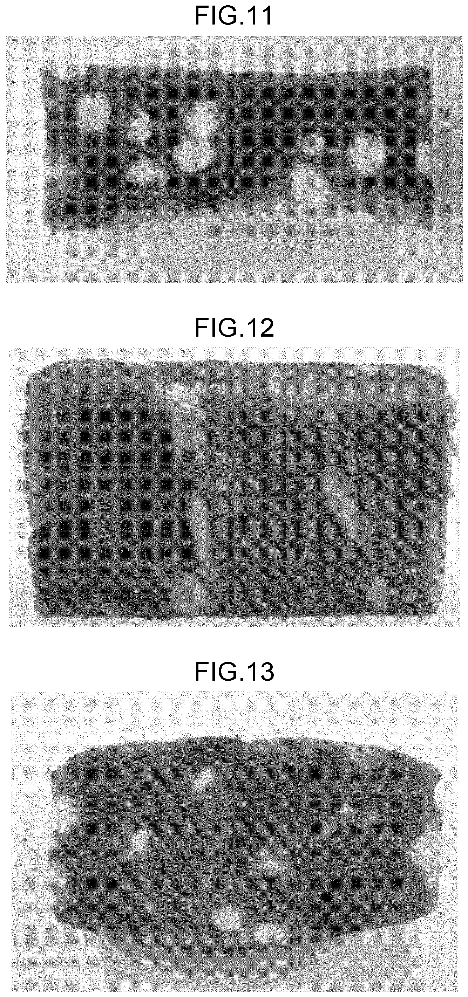

The image A and the image B of the steak meat alternative precursor produced using the fat lump composition of Comparative Example 2 are illustrated in Fig. 10 and Fig. 11, respectively.

The image A and the image B of the steak meat alternative precursor produced using the fat lump mixture of Example 13 are illustrated in Fig. 12 and Fig. 13, respectively.

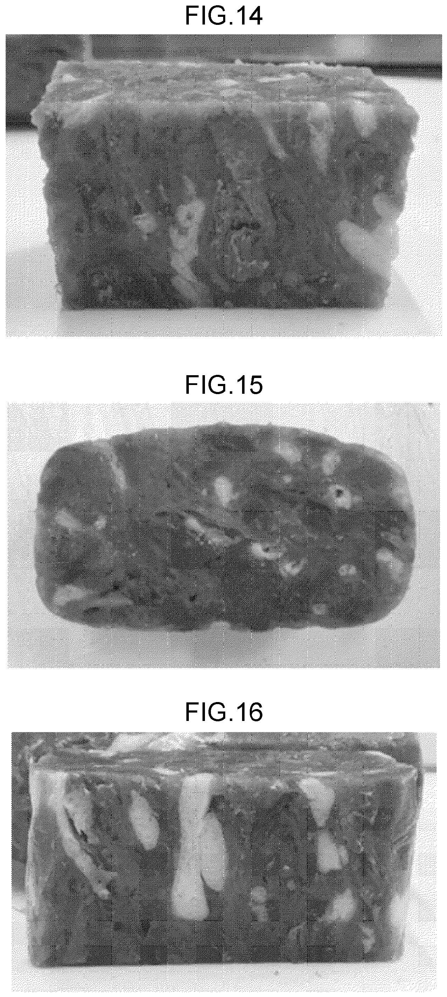

The image A and the image B of the steak meat alternative precursor produced using the fat lump mixture of Example 14 are illustrated in Fig. 14 and Fig. 15, respectively.

The image A and the image B of the steak meat alternative precursor produced using the fat lump mixture of Example 15 are illustrated in Fig. 16 and Fig. 17, respectively.

(Evaluation Criteria)

A: Five panelists answered that the meat had an appearance similar to that of marbled meat.
B: Four panelists answered that the meat had an appearance similar to that of marbled meat.
C: Three panelists answered that the meat had an appearance similar to that of marbled meat.
D: Two panelists answered that the meat had an appearance similar to that of marbled meat.
E: One panelist or no one answered that the meat had an appearance similar to that of marbled meat.

[Table 1]

| | Production conditions | | | | | | | Fat lump composition | | | | | | | |
|---|---|---|---|---|---|---|---|---|---|---|---|---|---|---|---|
| | Rotation speed of shaping roller (mm/sec) | Supply speed of specific liquid A (mm/sec) | Speed ratio | Time from contact between specific liquid B and specific liquid A to start of shaping fat lump composition precursor (sec) | Minimum distance between projection and support roller (mm) | Interval between adjacent projections (mm) | Minimum distance between dicing part and support roller (mm) | Length a (mm) | Length b (mm) | Length c (mm) | Length d (mm) | b/a | c/b | d/a | b2/b1 |
| Example 1 | - | - | - | - | - | - | - | 2.1 | 5.2 | 37.0 | 1.5 | 2.48 | 7.12 | 0.71 | 0.63 |
| Example 2 | - | - | - | - | - | - | - | 2.1 | 5.2 | 5.4 | 1.5 | 2.48 | 1.04 | 0.71 | 0.68 |
| Example 3 | 178.0 | 83.3 | 2.14 | 0.275 | 0.5 | 5.0 | 0.1 | 2.4 | 6.5 | 36.0 | 1.6 | 2.71 | 5.54 | 0.67 | 0.63 |
| Example 4 | 178.0 | 83.3 | 2.14 | 0.275 | 0.2 | 5.0 | 0.1 | 1.8 | 7 | 37.0 | 1.0 | 3.89 | 5.29 | 0.56 | 0.67 |
| Example 5 | 178.0 | 83.3 | 2.14 | 0.275 | 0.9 | 5.0 | 0.1 | 2.8 | 6.2 | 37.0 | 2.2 | 2.21 | 5.97 | 0.79 | 0.61 |
| Example 6 | 178.0 | 83.3 | 2.14 | 0.275 | 0.5 | 2.0 | 0.1 | 1.9 | 7.1 | 37.0 | 1.2 | 3.74 | 5.21 | 0.63 | 0.67 |
| Example 7 | 178.0 | 83.3 | 2.14 | 0.275 | 0.5 | 8.0 | 0.1 | 2.6 | 6.2 | 37.0 | 1.9 | 2.38 | 5.97 | 0.73 | 0.65 |
| Example 8 | 178.0 | 83.3 | 2.14 | 0.275 | 0.5 | 15.0 | 0.1 | 3 | 6.1 | 37.0 | 2.4 | 2.03 | 6.07 | 0.80 | 0.67 |
| Example 9 | 178.0 | 83.3 | 2.14 | 0.275 | 0.5 | 5.0 | 0.6 | 2.5 | 6.4 | 37.0 | 1.7 | 2.56 | 5.78 | 0.68 | 0.62 |
| Example 10 | 356.0 | 83.3 | 4.27 | 0.138 | 0.5 | 5.0 | 0.1 | 2.4 | 6.5 | 37.0 | 1.7 | 2.71 | 5.69 | 0.71 | 0.52 |
| Example 11 | 89.0 | 83.3 | 1.07 | 0.550 | 0.5 | 5.0 | 0.1 | 2.5 | 6.3 | 37.0 | 1.7 | 2.52 | 5.87 | 0.68 | 0.66 |
| Example 12 | 59.3 | 83.3 | 0.71 | 0.826 | 0.5 | 5.0 | 0.1 | 2.5 | 6.4 | 115.0 | 1.8 | 2.56 | 17.97 | 0.72 | 0.64 |
| Comparative Example 1 | - | - | - | - | - | - | - | 3 | 3 | 37.0 | 2.8 | 1.00 | 12.33 | 0.93 | 0.88 |
| Comparative Example 2 | - | - | - | - | - | - | - | 5 | 5 | 38.0 | 4.6 | 1.00 | 7.60 | 0.92 | 0.82 |
| Comparative Example 3 | 178.0 | 83.3 | - | - | 0.5 | 5.0 | 0.1 | 4.5 | 4.6 | 37.0 | 4.2 | 1.02 | 8.04 | 0.91 | 0.84 |

[Table 2]

|  | Appearance evaluation of meat alternative |
|---|---|
| Example 1 | A |
| Example 2 | B |
| Example 3 | A |
| Example 4 | A |
| Example 5 | B |
| Example 6 | A |
| Example 7 | B |
| Example 8 | C |
| Example 9 | B |
| Example 10 | A |
| Example 11 | A |
| Example 12 | B |
| Example 13 | C |
| Example 14 | B |
| Example 15 | A |
| Comparative Example 1 | E |
| Comparative Example 2 | E |
| Comparative Example 3 | E |

From the above results, it can be appreciated that the meat alternative produced using the fat lump composition or the fat lump mixture of each of Examples has an appearance similar to that of chunk of meat.

(List of References)

10 Fat lump composition
100 Production apparatus of fat lump composition
101 Supply unit of specific liquid A
102 Supply unit of specific liquid B
103 Shaping roller
104 Support roller
105 Bathtub
106 Projection
107 Shaping part
108 Dicing part
109 Fat lump composition
110 Washing unit
200 Production apparatus of fat lump composition
201 Supply unit of specific liquid A
202 Shaping roller
203 Support roller
204 Tank filled with specific liquid B
205 Fat lump composition
206 Projection
207 Shaping part
208 Dicing part
A Specific liquid A

B Specific liquid B

X Longitudinal direction

a In cross section perpendicular to longitudinal direction of fat lump composition 10 (cross section taken along A-A), length of line having maximum length among lines perpendicular to line having maximum length between two points

b In cross section perpendicular to longitudinal direction of fat lump composition 10 (cross section taken along A-A), length of line having maximum length between two points c Length of fat lump composition in longitudinal direction

d In cross section perpendicular to longitudinal direction of fat lump composition 10 (cross section taken along A-A), length of line having minimum length among lines which are perpendicular to line having maximum length between two points and have ratio of length to line having maximum length between two points of 0.10 or more

The disclosure of Japanese Patent Application No. 2022-105051 filed on June 29, 2022 is incorporated herein by reference in their entirety. All publications, patent applications, and technical standards mentioned in this specification are incorporated herein by reference to the same extent as if each individual publication, patent application, or technical standard was specifically and individually indicated to be incorporated by reference.

## Claims

1. A fat lump composition, comprising:

   a granular material containing at least one of an oil or a fat; and
   an edible ionically crosslinkable polymer that is crosslinked with a cation,
   wherein b/a is 2.00 or more, in which in at least one of cross sections of the fat lump composition perpendicular to a longitudinal direction, b is a length of a line having a maximum length between two points, and a is a length of a line having a maximum length among lines perpendicular to the line having the maximum length between the two points.

2. The fat lump composition according to claim 1, wherein c/b is 2.00 or more, in which c is a length of the fat lump composition in the longitudinal direction.

3. The fat lump composition according to claim 2, wherein the length c is from 10.0 mm to 100.0 mm.

4. The fat lump composition according to claim 1 or 2, wherein the length a is from 0.5 mm to 8.0 mm.

5. The fat lump composition according to claim 1 or 2, wherein d/a is 0.80 or less, in which d is a length of a line having a minimum length among lines which are perpendicular to the line having the maximum length between the two points and have a ratio of a length to the line having the maximum length between the two points of 0.10 or more.

6. A fat lump mixture comprising the fat lump composition according to claim 1, wherein a content of the fat lump composition is 30% by mass or more with respect to a total mass of the fat lump mixture.

7. A meat alternative, comprising:

   a lean meat-like portion containing a protein; and
   the fat lump composition according to claim 1 or the fat lump mixture according to claim 6.

8. The meat alternative according to claim 7, wherein a content of the fat lump composition is 3% by mass or more with respect to a total mass of the meat alternative.

9. A method of producing a fat lump composition, the method comprising:

   bringing a liquid containing an edible ionically crosslinkable polymer and a granular material containing at least one of an oil or a fat into contact with a liquid containing a cation to prepare a fat lump composition precursor; and
   shaping the fat lump composition precursor.

10. The method of producing a fat lump composition according to claim 9, wherein a period of time from contact between the liquid containing an edible ionically crosslinkable polymer and a granular material containing at least one of an oil or a fat, and the liquid containing a cation, to the start of shaping of the fat lump composition precursor is less than or equal to 1 minute.

11. The method of producing a fat lump composition according to claim 9 or 10, wherein shaping of the fat lump composition precursor is performed by pressurizing the fat lump composition precursor by a shaping member and a support member.

12. The method of producing a fat lump composition according to claim 11, wherein:

the shaping member is a shaping roller arranged so as to face the support member,
the shaping roller has a shaping part having a projection, and
a minimum distance between the projection and the support member is from 0.1 mm to 1.0 mm.

13. The method of producing a fat lump composition according to claim 12, wherein contact between the liquid containing an edible ionically crosslinkable polymer and the granular material containing at least one of an oil or a fat, and the liquid containing a cation, is performed by supplying the liquid containing an edible ionically crosslinkable polymer and the granular material containing at least one of an oil or a fat to a surface of the shaping roller or the support member on which the liquid containing a cation is present, and then supplying the liquid containing a cation.

14. The method of producing a fat lump composition according to claim 13, wherein a ratio of a rotation speed or a movement speed of the shaping roller or the support member to a supply speed of the liquid containing an edible ionically crosslinkable polymer, and the granular material containing at least one of an oil or a fat, to the shaping roller or the support member is 1.00 or more.

15. The method of producing a fat lump composition according to claim 12 or 13, wherein:

the shaping part has two or more projections,
the projections extend in one direction, and
an interval between adjacent projections is 10.0 mm or less.

16. The method of producing a fat lump composition according to claim 12 or 13, wherein the shaping roller includes a dicing part.

# FIG.1

10

c

X

A

A

# FIG.2

10

d

a

b

# FIG.3

# FIG.4

## FIG.5

## FIG.6

## FIG.7

## FIG.8

## FIG.9

## FIG.10

## FIG.11

## FIG.12

## FIG.13

## FIG.14

## FIG.15

## FIG.16

## FIG.17

## FIG.18

## INTERNATIONAL SEARCH REPORT

| International application No. |
|---|
| **PCT/JP2023/019774** |

**A.    CLASSIFICATION OF SUBJECT MATTER**

*A23L 5/00*(2016.01)i; *A23L 13/00*(2016.01)i; *A23J 3/00*(2006.01)n; *A23J 3/16*(2006.01)n; *A23J 3/18*(2006.01)n; *A23J 3/26*(2006.01)n

FI:    A23L5/00 A; A23L5/00 L; A23L5/00 M; A23L13/00 Z; A23J3/00 504; A23J3/16 501; A23J3/18 502; A23J3/26 501

According to International Patent Classification (IPC) or to both national classification and IPC

**B.    FIELDS SEARCHED**

Minimum documentation searched (classification system followed by classification symbols)

A23L5/00; A23L13/00; A23J3/00; A23J3/16; A23J3/18; A23J3/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | CN 114208897 A (GUANGZHOU DISTILLERY GROUP RIKKOFU FOOD CO., LTD.) 22 March 2022 (2022-03-22)<br>    paragraphs [0078]-[0088] | 9-11 |
| Y |     paragraphs [0078]-[0088] | 1-8 |
| A |     paragraphs [0078]-[0088] | 12-16 |
| X | CN 104939100 A (SICHUAN MOLI TECHNOLOGY CO., LTD.) 30 September 2015 (2015-09-30)<br>    paragraphs [0018], [0019] | 9-11 |
| Y |     paragraphs [0018], [0019] | 1-8 |
| A |     paragraphs [0018], [0019] | 12-16 |
| X | CN 102871141 A (JIANGNAN UNIVERSITY) 16 January 2013 (2013-01-16)<br>    paragraphs [0005], [0010], [0050]-[0057] | 9-11 |
| Y |     paragraphs [0005], [0010], [0050]-[0057] | 1-8 |
| A |     paragraphs [0005], [0010], [0050]-[0057] | 12-16 |

☑ Further documents are listed in the continuation of Box C.　　☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **31 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/019774** |

## C.    DOCUMENTS CONSIDERED TO BE RELEVANT

| Category* | Citation of document, with indication, where appropriate, of the relevant passages | Relevant to claim No. |
| --- | --- | --- |
| Y | JP 2022-517863 A (REDEFINE MEAT LTD) 10 March 2022 (2022-03-10) paragraphs [0016], [0051], [0221]-[0225], fig. 5, 6 | 1-8 |

Form PCT/ISA/210 (second sheet) (January 2015)

INTERNATIONAL SEARCH REPORT
Information on patent family members

International application No.

**PCT/JP2023/019774**

| Patent document cited in search report | | | Publication date (day/month/year) | Patent family member(s) | Publication date (day/month/year) |
|---|---|---|---|---|---|
| CN | 114208897 | A | 22 March 2022 | (Family: none) | |
| CN | 104939100 | A | 30 September 2015 | (Family: none) | |
| CN | 102871141 | A | 16 January 2013 | (Family: none) | |
| JP | 2022-517863 | A | 10 March 2022 | US 2022/0125072 A1 paragraphs [0040], [0081], [0284]-[0288], fig. 5, 6 WO 2020/152689 A1 CN 113631045 A KR 10-2022-0002252 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H241315 B

- JP 2022105051 A

**Non-patent literature cited in the description**

- Standard Methods for the Analysis of Fats. Oils and Related Materials. Japan Oil Chemists' Society, 1996

- **C. M. HANSEN** ; **HANSEN**. solubility parameteres: a user7S handbook. CEC press, 2007